# EUROPÄISCHE PATENTSCHRIFT

(11) **EP 1 532 701 B1**
(45) Veröffentlichungstag und Bekanntmachung des Hinweises auf die Patenterteilung: **04.01.2006**
(21) Anmeldenummer: 03790805.0
(22) Anmeldetag: 21.07.2003
(51) Int. Cl.: H01M 2/16

(54) **IONENLEITENDER BATTERIESEPARATOR FÜR LITHIUMBATTERIEN, VERFAHREN ZU DESSEN HERSTELLUNG UND DIE VERWENDUNG DESSELBEN**
ION CONDUCTING BATTERY SEPARATOR FOR LITHIUM BATTERIES, METHOD FOR THE PRODUCTION AND USE THEREOF
SEPARATEUR DE BATTERIE CONDUCTEUR D'IONS POUR DES BATTERIES AU LITHIUM, SON PROCEDE DE PRODUCTION ET SON UTILISATION

(30) Priorität: 27.08.2002 DE 10240032
(43) Veröffentlichungstag der Anmeldung: 25.05.2005
(73) Patentinhaber: Degussa AG, 40474 Düsseldorf (DE)
(72) Erfinder: HENNIGE, Volker, 48249 Dülmen (DE); HYING, Christian, 46414 Rhede (DE); HÖRPEL, Gerhard, 48301 Nottuln (DE)
(86) Internationale Anmeldenummer: PCT/EP2003/007933
(87) Internationale Veröffentlichungsnummer: WO 2004/021477

(56) Entgegenhaltungen:
- EP-A- 0 981 176
- EP-A- 1 049 188
- US-A- 5 449 576

## Beschreibung

Ein elektrischer Separator ist ein Separator, der in Batterien und anderen Anordnungen, in denen Elektroden, z. B. unter Aufrechterhaltung von Ionenleitfähigkeit, voneinander separiert werden müssen, eingesetzt wird.

Der Separator ist üblicherweise ein dünner, poröser, isolierender Stoff mit hoher Ionendurchlässigkeit, guter mechanischer Festigkeit und Langzeitstabilität gegen die im System, z. B. im Elektrolyten der Batterie, verwendeten Chemikalien und Lösungsmittel. Er soll in Batterien die Kathode von der Anode elektronisch völlig isolieren aber für den Elektrolyten durchlässig sein. Außerdem muss er dauerelastisch sein und den Bewegungen im System, z. B. im Elektrodenpaket beim Laden und Entladen, folgen.

Der Separator bestimmt maßgeblich die Lebensdauer der Anordnung, in der er verwendet wird, z. B. die von Batterie-Zellen. Die Entwicklung wiederaufladbarer Batterien wird daher durch die Entwicklung geeigneter Separatormaterialien geprägt.

Allgemeine Informationen über elektrische Separatoren und Batterien können z. B. bei J.O. Besenhard in "Handbook of Battery Materials" (VCH-Verlag, Weinheim 1999) nachgelesen werden.

Derzeitig eingesetzte Separatoren bestehen überwiegend aus porösen organischen Polymerfilmen bzw. aus anorganischen Vliesstoffen, wie z. B. Vliesen aus Glas- oder Keramik-Materialien oder auch Keramikpapieren. Diese werden von verschiedenen Firmen hergestellt. Wichtige Produzenten sind hier: Celgard, Tonen, Ube, Asahi, Binzer, Mitsubishi, Daramic und andere. Ein typischer organischer Separator besteht z. B. aus Polypropylen oder aus einem Polypropylen/Polyethylen/Polypropylen-Verbund.

Nachteile dieser organischen Polyolefinseparatoren sind deren relativ geringe thermische Belastbarkeit von deutlich unter 150 °C sowie ihre geringe chemische Stabilität in anorganischen Lithium-Batteriezellen. Die verwendeten Polyolefine werden in den Li-Batterien beim Kontakt des Separators mit dem Lithium bzw. mit dem lithiierten Graphit langsam angegriffen. Bei Systemen mit einem Polymerelektrolyten kommt es deshalb zur Bildung einer dichten Oxidationsproduktschicht, die eine weitere Zerstörung des Separators in Li-Ionen-Batterien verhindert.

Es gibt erste Versuche anorganische Verbundmaterialien als Separatoren einzusetzen. So wird in DE 198 38 800 ein elektrischer Separator, der ein flächiges, mit einer Vielzahl von Öffnungen versehenes, flexibles Substrat mit einer darauf befindlichen Beschichtung umfasst, welcher dadurch gekennzeichnet ist, dass das Material des Substrates ausgewählt ist aus Metallen, Legierungen, Kunststoffen, Glas und Kohlefaser oder einer Kombination solcher Materialien und die Beschichtung eine flächig durchgehende, poröse, elektrisch nicht leitende keramische Beschichtung ist. Die Separatoren, die einen Support aus elektrisch leitendem Material aufweisen (wie im Beispiel angegeben), haben sich allerdings als ungeeignet für Lithium-Ionen-Zellen herausgestellt, da die Beschichtung in der beschriebenen Dicke nicht großflächig fehlerfrei hergestellt werden kann und es somit sehr leicht zu Kurzschlüssen kommt.

In EP 1 049 188 wird deshalb versucht einen Separator herzustellen, der aus einem Film aus Polymeren mit darin enthaltenem Lithium-Ionen leitenden Glass-Keramik-Pulver besteht. Dieser Separator wird anschließend mit einem Elektrolyten imprägniert. Der beschriebene Film weist eine Dicke von kleiner 100 µm auf. Die erzielten Leitfähigkeiten sind zwar besser als die von Separatoren, die kein Lithium-Ionen leitendes Glas-Keramik-Pulver aufweisen, liegen aber immer noch zwischen 1 x 10⁻⁴ und 1 x 10⁻³ S/cm und damit immer noch in einem Bereich, der für technische Anwendungen in Hochleistungsbatterien zu gering ist.

In DE 199 18 856 wird ein Separator beschrieben, der auf einem Substrat aus Polymerfasern basieren kann, auf welches eine Dispersion von Keramikpartikeln in einer Lösung eines aromatischen, stickstoffhaltigen Polymers in einem polaren, organischen Lösemittel, aufgebracht wird. Das Polymer wirkt dabei als Binder bzw. Filmbildner, während die Keramikpartikel für eine gewisse Porosität sorgen sollen. So hergestellte Separatoren zeigen eine geringe Porosität, weil die Poren der Keramikpartikel teilweise durch den Binder verschlossen.

In JP 11166114 wird ein polymerer ionenleitender Film beschrieben, der für Lithiumbatterien als Separator geeignet ist. Dieser Separator enthält fimktionalisierte Siloxane sowie Polyalkylether und Polyalkylenglykole als organische Polymere. In diesen organisch/anorganischen Filmen wird dann ein Leitsalz, wie LiPF₆ oder LiClO₄ gelöst. Dieser Separator enthält aber keine anorganischen Partikel. Da die ionischen Gruppen, d. h. die Anionen, nicht an eine Matrix aus z. B. anorganischen Partikeln gebunden sind, ist die Überführungszahl für das Lithium und damit die Leitfähigkeit insgesamt vergleichsweise klein.

Zusammenfassend lässt sich feststellen, dass zur Zeit kein geeignetes, im Wesentlichen anorganisches Separatormaterial vorliegt, mit dem man insbesondere auch gewickelte anorganische und damit im Betrieb sehr sichere Hochleistungs- bzw. Hochenergiebatterien kostengünstig produzieren kann.

In vorangehenden Arbeiten (DE 101 42 622) konnte gezeigt werden, dass solche anorganischen Separatoren ansatzweise realisierbar ist mit einem Material, das, ein flächiges, mit einer Vielzahl von Öffnungen versehenes, flexibles Substrat mit einer auf und in diesem Substrat befindlichen Beschichtung umfasst, wobei das Material des Substrates ausgewählt ist aus gewebten oder ungewebten, nicht elektrisch leitfähigen Fasern von Glas oder Keramik oder einer Kombination solcher Materialien und die Beschichtung eine poröse, elektrisch isolierende, keramische Beschichtung ist, und wobei der resultierende Separator eine Dicke von kleiner 100 µm aufweist und biegbar ist, einen in Verbindung mit dem Elektrolyten genügend geringen Widerstand aufweist und trotzdem eine ausreichend große Langzeitbeständigkeit aufweist. Für eine Vielzahl von Anwendungen ist der Widerstand dieser Separatoren aber noch immer zu hoch, da als Träger ein Glasgewebe eingesetzt wird, das erstens zu dick ist und zweitens eine zu geringe Porosität aufweist.

Bei der weitergehenden Optimierung der Eigenschaften der in DE 101 42 622 beschriebenen Separatoren wurde gefunden, dass Separatoren mit den genannten Eigenschaften realisierbar sind, wenn polymere Substratmaterialien eingesetzt werden. Dadurch erhält man elektrische Separatoren, die ein flächiges, mit einer Vielzahl von Öffnungen versehenes, flexibles Substrat mit einer auf und in diesem Substrat befindlichen Beschichtung umfassen, wobei das Material des Substrates ausgewählt ist aus ungewebten, nicht elektrisch leitfähigen Fasern von Polymeren, und die Beschichtung eine poröse, elektrisch isolierende, keramische Beschichtung ist. Der Separator weist eine Dicke von kleiner 80 µm auf, ist biegbar und zeigt in Verbindung mit einem Elektrolyten einen genügend geringen Widerstand und besitzt zudem eine ausreichend große Langzeitbestäadigkeit.

Obwohl die in der noch nicht veröffentlichen Anmeldung DE 102 08 277 beschriebenen Separatoren sehr gut für die beschriebenen Aufgaben geeignet sind, mussten wir feststellen, dass eine weitere Steigerung der Stromdichte und eine Verringerung des Widerstandes durch Optimierung von Parametern wie Porosität und Dicke des Separators nur sehr schwer erreichbar ist, da die Grenzen der mechanischen Belastbarkeit erreicht werden oder schon erreicht worden sind.

Hochleistungsbatterien zeichnen sich dadurch aus, dass innerhalb einer sehr kurzen Zeit große Energiemengen entnommen werden können. Dabei soll es bei den hohen Stromdichten nicht zu einem Einbruch der Spannung kommen. Dies wird im allgemeinen durch die Optimierung der negativen und positiven Aktivmassen (Graphit- und Lithiumcobaltoxid-Elektrode) erreicht. Zudem sollte der mit Elektrolyt getränkte Separator einen möglichst niedrigen Widerstand besitzen. Erreicht wird dies, indem man einen sehr offenen Separator wählt, der über sehr geradlinige und möglichst große Poren verfügt. Zudem sollte der Separator möglichst dünn sein. Wie bereits beschrieben stößt man bei der Variation dieser Parameter nun an technologische Grenzen, die nicht überwunden werden können.

Es war deshalb Aufgabe der vorliegenden Erfindung einen Separator bereitzustellen, der für die Anwendung in Lithium-Hochleistungsbatterien besonders gut geeignet ist und eine weitere Leistungssteigerung bzw. Belastungssteigerung solcher Batteriesysteme zulässt.

Überraschenderweise wurde nun gefunden, dass man eine weitere deutliche Steigerung der Belastbarkeit eines Separators bzw. Batteriesystems erreichen kann, indem man die Poren des Separators mit negativen Festladungen ausstattet. Hierzu können die verschiedensten Chemikalien mit negativen Ladungen und Lithium als Gegenion, die sich beispielsweise über Zr-O- oder Si-O-Gruppen an die keramische Oberfläche anbinden lassen eingesetzt werden. Als Beispiele seien hier die Zirkoniumphosphate oder -sulfoarylphosphonate und die Sulfoalkylsilane genannt. Die Herstellung eines ionenleitenden Verbundwerkstoffes ist bereits in WO 99/62620 beschrieben worden, jedoch ist dort nicht beschrieben worden, dass ein solcher Verbundwerkstoff durch einige Anpassungsschritte zu einem hervorragenden Separator für Lithium-Hochleistungsbatterien umgearbeitet werden kann.

Gegenstand der vorliegenden Erfindung ist deshalb ein Separator für Lithium-Hochleistungsbatterien auf Basis eines flächigen, mit einer Vielzahl von Öffnungen versehenen, flexiblen Substrates mit einer auf und in diesem Substrat befindlichen porösen, anorganischen, elektrisch isolierenden Beschichtung, die die Öffnungen des Substrates verschließt, wobei das Material des Substrates ausgewählt ist aus ungewebten, nicht elektrisch leitfähigen Polymerfasern und die anorganische elektrisch isolierende Beschichtung Partikel aufweist, welcher dadurch gekennzeichnet ist, dass der Separator ohne das Vorhandensein eines Elektrolyten Lithium-Ionen leitende Eigenschaften aufweist und ein elektrischer Isolator ist.

Ebenfalls Gegenstand der vorliegenden Erfindung ist ein Verfahren zur Herstellung eines erfindungsgemäßen Separators mit Lithium-Ionen leitenden Eigenschaften, umfassend ein flächiges, mit einer Vielzahl von Öffnungen versehenes, flexibles Substrat mit einer auf und in diesem Substrat befindlichen porösen, anorganischen, elektrisch isolierenden Beschichtung, wobei das Material des Substrates ausgewählt ist aus ungewebten, nicht elektrisch leitfähigen Polymerfasern, welches dadurch gekennzeichnet ist, dass zur Herstellung des Separators eine Verbindung eingesetzt wird, die Lithium-Ionen leitende Eigenschaften aufweist.

Außerdem ist Gegenstand der vorliegenden Erfindung die Verwendung eines erfindungsgemäßen Separators als Separator in Lithium-Batterien, insbesondere Lithium-Hochleistungsbatterien sowie Lithiumbatterien, die einen erfindungsgemäßen Separator aufweisen.

Der erfindungsgemäße Separator hat den Vorteil, dass er bereits ohne einen Elektrolyten Lithium-Ionen leitende Eigenschaften aufweist. Auf diese Weise wird die Lithium-IonenLeitfähigkeit des mit Elektrolyten gefüllten Separators gegenüber herkömmlichen Separatoren deutlich erhöht. Durch das Einbringen negativer Festladungen wird die Überführungszahl für das Lithium-Ion, welches idealerweise ausschließlich wandern sollte, vergrößert. Werden nicht nur die Porenwände mit negativen Festladungen ausgestattet, sondern auch das Porengefüge aufbauende Material aus Li-Ionen-leitenden anorganischen Materialien aufgebaut, so führt dies zu einer weiteren geringen Erhöhung der Leitfähigkeit des mit Elektrolyt gefüllten Separators.

Der erfindungsgemäße Separator zeigt außerdem eine wesentlich höhere Leitfähigkeit als anorganische nicht poröse Lithium-Ionen leitende Separatoren auf Basis von festen Ionenleitern. Bei solchen Separatoren besteht der Nachteil darin, dass die Anbindung an die Aktivmassen kaum erreicht werden kann. Es muss nämlich beachtet werden, dass die Ionen nur durch einen Elektrolyten in die poröse Matrix der Aktiv-Massen gelangen können. Daher kann nicht gänzlich auf Elektrolyt verzichtet werden. Beim erfindungsgemäßen Separator wird dieses Problem umgangen, indem weiterhin Lithium-Ionen leitender Elektrolyt zugegen ist. Die absolute Menge an Elektrolyt kann aber geringer sein als in konventionellen Batteriesystem. Durch die mit Elektrolyt gefüllten Poren steht eine sehr große Oberfläche zur Verfügung und es werden dadurch die Durchtrittswiderstände, wie sie bei Zellen mit laminierten Polymerelektrolytseparatoren an allen scharf begrenzten Materialübergängen auftreten, verringert.

Der erfindungsgemäße Separator hat außerdem den Vorteil, dass seine Verwendung in Lithiumbatterien zu sehr sicheren Batterien führt.

Polymerseparatoren bringen beispielsweise die für Lithium-Batterien zur Zeit geforderte Sicherheit, indem sie ab einer bestimmten Temperatur (der Shut-Down-Temperatur, die bei ca. 120 °C liegt) jeglichen Ionen-Transport durch den Elektrolyten unterbinden. Dies geschieht dadurch, dass bei dieser Temperatur das Porengefüge des Separators zusammenbricht und alle Poren verschlossen werden. Dadurch, dass keine Ionen mehr transportiert werden, kommt die gefährliche Entladung und somit die Reaktion, die zur Explosion führen kann, zum erliegen. Wird die Zelle aufgrund äußerer Umstände aber weiter erwärmt, so wird bei ca. 150 bis 180 °C die Break-Down-Temperatur überschritten. Ab dieser Temperatur kommt es zum Schmelzen des Separators, wobei dieser sich zusammenzieht. An vielen Stellen in der Batteriezelle kommt es nun zu einem direkten Kontakt zwischen den beiden Elektroden und somit zu einem großflächigem inneren Kurzschluss. Dieser führt zur unkontrollierten Reaktion, die mit einer Explosion der Zelle endet bzw. bei der der entstehende Druck durch ein Überdruckventil (eine Berstscheibe), häufig unter Feuererscheinungen, abgebaut wird.

Bei dem erfindungsgemäßen hybriden, also anorganische Komponenten und polymeres Trägermaterial aufweisenden Separator kommt es zum Shut-Down wenn durch die hohe Temperatur das Polymergefüge des Trägermaterials schmilzt und in die Poren des anorganischen Materials eindringt und diese dadurch verschließt. Dies erfolgt mit Polyethylen (PE) bei etwa 125 °C mit Polypropylen (PP) bei 150 - 165 °C und mit Polyethylenterephthalat (PET) bei über 230 °C. Zum sogenannten Melt-Down (mit PP-Separatoren bei etwa 150 bis max. 165 °C) kommt es bei dem erfindungsgemäßen Separator dagegen nicht. Der erfindungsgemäße Separator erfüllt also die Anforderungen nach einer von verschiedenen Batterieherstellern geforderten Sicherheitsabschaltung durch den Shut-Down in den Batteriezellen. Die anorganischen Partikel sorgen dafür, dass es niemals zu einem Melt-Down kommen kann. Somit ist sichergestellt, dass es keine Betriebszustände gibt, in denen ein großflächiger Kurzschluss entstehen kann.

Falls ein zusätzlicher Shut-Down-Mechanismus (Abschaltmechanismus) für die Anwendung zwingend erforderlich ist, so kann dies dadurch erreicht werden, das die Oberfläche und/oder die Poren des erfindungsgemäßen keramischen bzw. hybriden Separators mit einem Stoff ausgestattet werden, der bei Erreichen der Temperaturgrenze die Poren schließt und den weiteren Ionenfluss verhindert. Dies kann Beispielweise durch ein Polymer oder ein Wachs erreicht werden, dessen Schmelzpunkt in diesem Bereich liegt.

Auch bei einem inneren Kurzschluss, der z. B. durch einen Unfall verursacht wurde, ist der erfindungsgemäße Separator sehr sicher. Würde sich z. B. ein Nagel durch eine Batterie bohren, geschieht je nach Separator folgendes: Der Polymerseparator würde an der Durchdringungsstelle (Ein Kurzschlussstrom fließt über den Nagel und heizt diesen auf) schmelzen und sich zusammenziehen. Dadurch wird die Kurzschlussstelle immer größer und die Reaktion gerät außer Kontrolle. Bei dem erfindungsgemäßen hybriden Separator schmilzt allenfalls das polymere Substratmaterial, nicht aber das anorganische Separatormaterial. Somit läuft die Reaktion im Inneren der Batteriezelle nach einem solchen Unfall sehr viel moderater ab. Diese Batterie ist somit deutlich sicherer als eine mit Polymerseparator. Dies kommt vor allem im mobilen Bereich zum Tragen.

Der erfindungsgemäße Separator wird im Folgenden beispielhaft beschrieben, ohne darauf beschränkt zu sein.

Der erfindungsgemäße Separator für Lithium-Hochleistungsbatterien auf Basis eines flächigen, mit einer Vielzahl von Öffnungen versehenen, flexiblen Substrates mit einer auf und in diesem Substrat befindlichen porösen, anorganischen, elektrisch isolierenden Beschichtung, die die Öffnungen des Substrates verschließt, wobei das Material des Substrates ausgewählt ist aus ungewebten, nicht elektrisch leitfähigen Fasern und die anorganische elektrisch isolierende Beschichtung Partikel aufweist, zeichnet sich dadurch aus, dass der Separator ohne das Vorhandensein eines Elektrolyten Lithium-Ionen leitende Eigenschaften aufweist und ein elektrischer Isolator ist.

Die erfindungsgemäßen Separatoren sind vorzugsweise bei einer Temperatur von -40 °C bis 150 °C Lithium-Ionen leitend. Die Lithium-Ionen leitenden Eigenschaften des Separators werden vorzugsweise dadurch erzielt, dass der Separator zumindest ein anorganisches und/oder organisches Material aufweist, das Lithium-Ionen leitende Eigenschaften aufweist und mit der anorganischen Beschichtung chemisch verbunden ist. Besonders bevorzugt kann es sein, wenn zumindest ein anorganisches Material, das auch organische Gruppen aufweisen kann und das Lithium-Ionen leitende Eigenschaften aufweist, als Beimischung im Gefüge des Separators, also in der porösen Beschichtung vorhanden ist. In einer besonders bevorzugten Ausführungsart des erfindungsgemäßen Separators weist zumindest ein Teil des die anorganische poröse Beschichtung bildenden Materials Lithium-Ionen leitende Eigenschaften auf.

Das Material des Substrates kann ausgewählt sein aus Gewirken, Filzen oder Vliesen von Polymerfasern. Vorzugsweise weist der erfindungsgemäße Separator, ein flexibles Vlies mit einer auf und in diesem Vlies befindlichen porösen anorganischen Beschichtung auf. Das Vlies weist vorzugsweise eine Dicke von weniger als 30 µm auf.

Besonders bevorzugt weist der erfindungsgemäße Separator ein Substrat, vorzugsweise ein Vlies auf, welches eine Dicke von kleiner 20 µm, vorzugsweise eine Dicke von 10 bis 20 µm aufweist. Besonders wichtig für die Verwendung in einem erfindungsgemäßen Separator ist eine möglichst homogene Porenradienverteilung im Vlies. Eine homogene Porenradienverteilung im Vlies führt in Verbindung mit optimal abgestimmten Partikeln bestimmter Größe zu einer optimierten Porosität des erfindungsgemäßen Separators. Ganz besonders bevorzugt weist ein erfindungsgemäßer Separator deshalb ein Vlies auf, welches eine Porenradienverteilung aufweist, bei der mindestens 50 % der Poren einen Porenradius von 50 bis 150 µm aufweisen.

Vorzugsweise weist das Vlies eine Porosität von mehr als 50 %, bevorzugt 50 bis 97 %, besonders bevorzugt von 60 bis 90 % und ganz besonders bevorzugt von 70 bis 90 % auf. Die Porosität ist dabei definiert als das Volumen des Vlieses (100 %) minus dem Volumen der Fasern des Vlieses, also dem Anteil am Volumen des Vlieses, der nicht von Material ausgefüllt wird. Das Volumen des Vlieses kann dabei aus den Abmessungen des Vlieses berechnet werden. Das Volumen der Fasern ergibt sich aus dem gemessen Gewicht des betrachteten Vlieses und der Dichte der Polymerfasern. Die große Porosität des Substrates ermöglicht auch eine höhere Porosität des erfindungsgemäßen hybriden Separators, weshalb eine höhere Aufnahme an Elektrolyten mit dem erfindungsgemäßen Separator erzielt werden kann.

Damit ein Separator mit isolierenden Eigenschaften erhalten werden kann, weist dieser als Polymerfasern für das Vlies nicht elektrisch leitfähige Fasern von Polymeren auf, die vorzugsweise ausgewählt aus Polyacrylnitril (PAN), Polyester, wie z. B. Polyethylenterephthalat und/oder Polyolefin (PO), wie z. B. Polypropylen (PP) oder Polyethylen (PE) oder Mischungen solcher Polyolefine sind. Die Polymerfasern der Vliese weisen vorzugsweise einen Durchmesser von 0,1 bis 10 µm, besonders bevorzugt von 1 bis 5 µm auf. Besonders bevorzugte Substrate bzw. Vliese weisen ein Flächengewicht von kleiner 20 g/m², vorzugsweise kleiner 10 g/m² auf.

Die erfindungsgemäßen Separatoren weisen vorzugsweise eine Dicke von kleiner 35 µm, bevorzugt kleiner 25 µm, besonders bevorzugt eine Dicke von 15 bis 25 µm auf. Die Dicke des Substrates hat einen großen Einfluss auf die Eigenschaften des Separators, da zum einen die Flexibilität aber auch der Flächenwiderstand des mit Elektrolyt getränkten Separators von der Dicke des Substrates abhängig ist. Durch die geringe Dicke wird ein besonders geringer elektrischer Widerstand des Separators in der Anwendung mit einem Elektrolyten erzielt. Der Separator selbst weist natürlich einen sehr hohen elektrischen Widerstand auf, da er selbst isolierende Eigenschaften aufweisen muss. Zudem erlauben dünnere Separatoren eine erhöhte Packungsdichte in einem Batteriestapel, so dass man im gleichen Volumen eine größere Energiemenge speichern kann.

Der erfindungsgemäße Separator weist auf und in dem Vlies eine poröse, elektrisch isolierende, keramische Beschichtung auf. Die auf und in dem Vlies befindliche poröse anorganische Beschichtung weist als Partikel bevorzugt Oxidpartikel der Elemente Al, Si und/oder Zr auf. Besonders bevorzugt weist der Separator eine auf und in dem Vlies befindliche poröse anorganische Beschichtung auf, die selbst Lithium-Ionen leitende Materialien aufweist. Solche Lithium-Ionen leitenden Materialien können z. B. Lithium-Phosphat-Zirkonat-Gläser, Lithium-Ionen leitende Glass-Keramiken, wie sie in EP 1 049 188 beschrieben werden, α- und/oder γ-Lithium-Zirkoniumphosphate oder der mit Lithiumsulfonaten dotierte Zirkoniumphosphonate oder ein Gemisch dieser Verbindungen sein. Die Metalloxid-Partikel und/oder die Lithium-Ionen leitenden Partikel sind vorzugsweise mit einem Oxid der Elemente Zr und/oder Si verklebt.

Der erfindungsgemäße Separator weist vorzugsweise eine Porosität von 30 % bis 80 % auf. Die Porosität bezieht sich dabei auf die erreichbaren, also offenen Poren. Die Porosität kann dabei mittels der bekannten Methode der Quecksilberporosimetrie bestimmt werden oder kann aus dem Volumen und der Dichte der verwendeten Einsatzstoffe errechnet werden, wenn davon ausgegangen wird, dass nur offene Poren vorliegen.

Die erfindungsgemäßen Separatoren zeichnen sich dadurch aus, dass sie eine Reißfestigkeit von mindestens 1 N/cm, vorzugsweise von mindestens 3 N/cm und ganz besonders bevorzugt von 3 bis 10 N/cm aufweisen können. Die erfindungsgemäßen Separatoren sind vorzugsweise flexibel und lassen sich bevorzugt ohne Beschädigung bis auf jeden Radius bis herab zu 100 m, vorzugsweise bis herab zu 0,5 m und ganz besonders bevorzugt bis herab zu 0,5 mm biegen. Die hohe Reißfestigkeit und die gute Biegbarkeit des erfindungsgemäßen Separators hat den Vorteil, dass beim Laden und Entladen einer Batterie auftretende Veränderungen der Geometrien der Elektroden durch den Separator mitgemacht werden können, ohne dass dieser beschädigt wird. Die Biegbarkeit hat zudem den Vorteil, dass mit diesem Separator kommerziell standardisierte Wickelzellen produziert werden können. Bei diesen Zellen werden die Elektroden/Separator-Lagen in standardisierter Größe miteinander spiralförmig aufgewickelt und kontaktiert.

Es kann vorteilhaft sein, wenn die inneren und/oder äußeren Oberflächen der im Separator vorhandenen Partikel mit einer Schicht aus einem Lithium-Ionen leitenden anorganischen Material, das auch organische Gruppen enthalten kann, überzogen sind. Eine solche Schicht weist vorzugsweise eine Dicke von 1 nm bis 1 µm, besonders bevorzugt von 10 nm bis 100 nm auf. Je nach Ausführungsart des erfindungsgemäßen Separators kann das in der Schicht vorhandene Lithium-Ionen leitende Material das einzige Material sein, welches Lithium-Ionen leitende Eigenschaften aufweist oder aber dieses Material ist zusätzlich zu solchem vorhanden, welches zur Bildung der anorganischen porösen Beschichtung herangezogen wird.

Vorzugsweise weist der Separator, insbesondere in der die Partikel überziehenden Schicht, ein Lithium-Ionen leitendes Material auf, welches negative Ladungen im Matrix-Material und Lithium-Kationen aufweist Besonders bevorzugt weist dieses Lithium-Ionen leitende Material ionische Gruppen aus der Gruppe der Sulfonate, Phosphonate, Carbonate, Sulfonylamide oder Gemische dieser Gruppen auf. Diese ionischen Gruppen können chemisch über organische Gruppen oder Spacer an die anorganischen Partikel gebundene organische Verbindungen sein. Besonders bevorzugt sind diese organischen Gruppen oder Spacer fluorierte oder nicht fluorierte Aryl- und/oder Alkylketten und/oder Polyetherketten und die ionischen Gruppen sind dadurch mit der inneren und/oder äußeren Oberfläche der im Separator vorhandenen Partikel verbunden. Die ionischen Gruppen sind allgemein, entweder direkt oder aber indirekt über die organischen Gruppen oder Spacer, über Si-O- oder Zr-O-Gruppen an die anorganischen Partikel gebunden.

In einer bevorzugten Ausführungsform weist der Separator als Lithium leitendes Material Verbindungen der allgemeinen Formel

[(R¹O)₃Si-R²]M⁺,

in der R¹ eine Methyl- oder Ethylgruppe ist, M entweder H oder Li ist und R² eine Bis(Perfluoromethylsulfonyl)amid-Gruppe der Formel

-CF₂-SO₂-N-SO₂-CF₃

darstellt, auf.

In einer ebenfalls bevorzugten Ausführungsform weist der Separator als Lithium leitendes Material siliziumorganischen Verbindungen der allgemeinen Formel

[{(RO)_{y}(R⁴)_{z}}ₐSi-{R³-SO₃⁻}_{b}]M⁺ (I)

oder

[(RO)_{y}(R⁴)_{z}Si-R³-PR⁵O₂]M⁺ (II)

in der R3 eine lineare oder verzweigte Alkylengruppe mit 1 bis 12 C-Atomen, eine Cycloalkylgruppe mit 5 bis 8 C-Atomen oder eine Einheit der allgemeinen Formeln 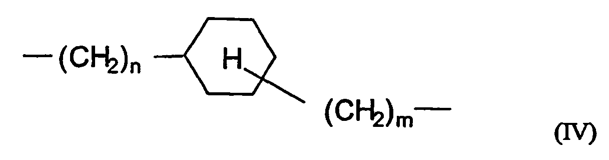
oder 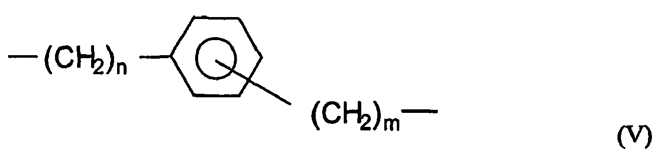
oder

-(CF₂-(CF₂)ₗ-O)ₙ-(CF₂)ₘ- (VI)

angibt, in der 1, n bzw. m eine Zahl von 0 bis 12, in der M ein H⁺ oder ein Lithium-Ion angibt, und in der y eine Zahl zwischen 1 und 3, z eine Zahl zwischen 0 und 2 ist, die Bedingung gilt, dass y + z = 3 ist, in der a eine Zahl zwischen 1 und 3 ist, die Bedingung gilt, dass b = 4 - a ist, in der R und R⁴ gleich oder verschieden sind und Methyl, Ethyl, Propyl, Butyl oder H darstellen und in der R⁵ gleich H, OH, OM oder R³ ist, auf.

In einer weiteren Ausführungsform können als Lithium-Ionen leitende Materialien auch Lithium-Phosphat-Zirkonat-Gläser, α- und/oder γ- Lithium-Zirkoniumphosphate oder Lithiumsulfonate- oder -phosphonate, die an α- und/oder γ- Zirkoniumphosphonate gebunden sind, oder ein Gemisch dieser Verbindungen im erfindungsgemäßen Separator vorhanden sein.

Auch diese Verbindungen lassen sich von den entsprechenden Säuren durch Ersatz des H⁺ durch Li⁺ ableiten. Nachfolgend sind einige Beispiele angegeben:

Zr(HPO₄)₂ → Li₂(Zr(PO₄)₂

Zr(O₃P-C₆H₄-SO₃H)₂→ Li₂Zr(O₃P-C₆H₄-SO₃)₂

Zr(O₃P-CH₂-PO₃H₂)₂ → Li₄Zr(O₃P-CH₂-PO₃)₂

Zr(O₃P-CF₂-PO₃H₂)₂ → Li₄Zr(O₃P-CF₂-PO₃)₂

Verallgemeinert weist der erfindungsgemäße Separator vorzugsweise Lithiumsalze mit der folgenden Formel:

Li₂Zr(O₃P-R-SO₃)₂

Li₄Zr(O₃P-R-PO₃)₂

als Lithium-Ionen leitende Materialien auf, wobei R für eine perfluorierte, teilweise fluorierte oder nicht fluorierte Aryl- oder Alkylkette mit 1-12 C-Atomen steht.

Alle diese Lithiumsalze, deren Anion an die anorganische Matrix gebunden ist, können also von den entsprechenden Säuren abgeleitet werden. Sie können auch zunächst in Form der Säuren in den Separatoren vorliegen. Vor dem Einsatz in den Batterien muss dann aber die H⁺ in die Li⁺-Form umgewandelt werden.

Als besonders vorteilhaft hat es sich erwiesen, wenn der erfindungsgemäße Separator in der porösen anorganischen Beschichtung ein Lithium-Ionen leitendes Material aufweist und die Partikel der Beschichtung zusätzlich eine Schicht aufweisen, die ebenfalls ein Lithium-Ionen leitendes Material aufweist. So ausgestattete Separatoren zeigen, in Verbindung mit einem geeigneten Elektrolyten, ganz besonders hohe Lithiumionenleitfähigkeiten.

Es kann vorteilhaft sein, wenn der Separator einen nicht inhärenten Shut-Down-Mechanismus aufweist. Dieser kann z. B. dadurch realisiert werden, dass auf oder in dem Separator eine sehr dünne Wachs- oder Polymerpartikelschicht vorhanden ist, die bei einer gewünschten Abschalttemperatur schmelzen, sogenannte Abschaltpartikel. Besonders bevorzugte Materialien, aus denen die Abschaltpartikel bestehen können, sind beispielweise natürliche oder künstliche Wachse, niedrigschmelzende Polymere, wie z. B. Polyolefine, wobei das Material der Abschaltpartikel so ausgewählt wird, das die Partikel bei der gewünschten Abschalttemperatur aufschmelzen und die Poren des Separators verschließen, so dass ein weiterer Ionenfluss verhindert wird.

Vorzugsweise weisen die Abschaltpartikel eine mittlere Partikelgröße (D_{w}) auf, die größer oder gleich der mittleren Porengröße (dₛ) der Poren der porösen anorganischen Schicht des Separator ist. Dies ist insbesondere deshalb vorteilhaft, weil so ein Eindringen und Verschließen der Poren der Separatorschicht, welches eine Reduktion des Porenvolumens und damit der Leitfähigkeit des Separators und auch der Leistungsfähigkeit der Batterie zur Folge hätte, verhindert wird. Die Dicke der Abschaltpartikelschicht ist nur in sofern kritisch, als das eine zu dicke Schicht den Widerstand in dem Batteriesystem unnötig erhöhen würde. Um eine sichere Abschaltung zu erzielen, sollte die Abschaltpartikelschicht eine Dicke (z_{w}) aufweisen, die von ungefähr gleich der mittleren Partikelgröße der Abschaltpartikel (D_{w}) bis zu 10 D_{w}, vorzugsweise von 2 D_{w} bis D_{w} beträgt. Ein so ausgerüsteter Separator weist ein primäres Sicherheitsmerkmal auf. Im Gegensatz zu den rein organischen Separatormaterialien kann dieser Separator aber nicht vollständig schmelzen und es kann somit nicht zum Melt-Down kommen. Diese Sicherheitsmerkmale sind aufgrund der sehr großen Energiemengen für Hochenergiebatterien sehr wichtig und werden deshalb häufig gefordert.

Die erfindungsgemäßen Separatoren sind vorzugsweise durch ein Verfahren zur Herstellung eines Separators mit Lithium-Ionen leitenden Eigenschaften, umfassend ein flächiges, mit einer Vielzahl von Öffnungen versehenes, flexibles Substrat mit einer auf und in diesem Substrat befindlichen porösen, anorganischen, elektrisch isolierenden Beschichtung, wobei das Material des Substrates ausgewählt ist aus ungewebten, nicht elektrisch leitfähigen Polymerfasern, erhältlich, welches dadurch gekennzeichnet ist, dass zur Herstellung des Separators eine Verbindung bzw. ein Material eingesetzt wird, die bzw. das Lithium-Ionen leitende Eigenschaften aufweist.

In einer Ausfühnmgsvariante des erfindungsgemäßen Verfahrens wird der Separator mit Lithium-Ionen leitenden Eigenschaften durch Behandlung eines Separators, der zunächst noch keine Lithium-Ionen leitenden Eigenschaften aufweist, mit zumindest einem Lithium-Ionen leitenden Material oder mit zumindest einem Material, welches nach einer weiteren Behandlung Lithium-Ionen leitende Eigenschaften aufweist, erhalten. Bei diesem Verfahren können als Separatoren, die keine Lithium-Ionen leitenden Eigenschaften aufweisen, insbesondere solche eingesetzt werden, die durch das nachfolgend beschriebene Verfahren, welches in DE 102 08 277 erstmalig beschrieben wurde, herstellbar sind.

Der einsetzbare Separator ist vorzugsweise erhältlich durch ein Verfahren zur Herstellung eines Separators, welches dadurch gekennzeichnet ist, dass ein flächiges, mit einer Vielzahl von Öffnungen versehenes, flexibles Substrat in und auf diesem Substrat mit einer Beschichtung versehen wird, wobei das Material des Substrates ausgewählt ist aus ungewebten, nicht elektrisch leitfähigen Fasern von Polymeren und die Beschichtung eine poröse, elektrisch isolierende, keramische Beschichtung ist.

Die Beschichtung wird auf das Substrat vorzugsweise durch Aufbringen einer Suspension, die zumindest ein nicht oder nur sehr schlecht elektrisch leitendes Oxid der Elemente Al, Zr und/oder Si und ein Sol aufweist, auf das Substrat und durch zumindest einmaliges Erwärmen, bei welchem die Suspension auf und im Träger verfestigt wird, aufgebracht. Das Verfahren selbst ist aus WO 99/15262 bekannt, jedoch lassen sich nicht alle Parameter bzw. Einsatzstoffe, insbesondere nicht elektrisch leitfähige Einsatzstoffe, für die Herstellung des erfindungsgemäßen Separators einsetzen. Aufgrund der Auswahl der Einsatzstoffe ergeben sich auch bestimmte Verfahrensparameter, die für die als Separator geeigneten Materialkombinationen erst gefunden werden mussten.

Die Suspension kann z. B. durch Aufdrucken, Aufpressen, Einpressen Aufrollen, Aufrakeln, Aufstreichen, Tauchen, Spritzen oder Aufgießen auf und in das Substrat gebracht werden.

Das Material des Substrates ist vorzugsweise ausgewählt aus Vliesen von Polymerfasern mit einer Dicke von 5 bis 30 µm. Es kann besonders vorteilhaft sein, wenn der im erfindungsgemäßen Verfahren eingesetzte Separator ein Substrat aufweist, welches eine Dicke von 10 bis 20 µm aufweist.

Die Polymerfasern sind bevorzugt ausgewählt aus Polyacrylnitril, Polyester, wie z. B. Polyethylenterephthalat und/oder Polyolefinen. Aber auch alle anderen bekannten Polymerfasern sind einsetzbar. Bevorzugt weist die erfindungsgemäße Membran Polymerfasern auf, die eine Erweichungstemperatur von größer 100 °C und eine Schmelztemperatur von größer 110 °C aufweisen. Es kann vorteilhaft sein, wenn die Polymerfasern einen Durchmesser von 0,1 bis 10 µm, vorzugsweise von 1 bis 5 µm aufweisen.

Die zur Herstellung der Beschichtung verwendete Suspension weist zumindest ein anorganisches Oxid des Aluminiums, Siliziums und/oder Zirkoniums und zumindest ein Sol der Elemente Zr, Al und/oder Si auf und wird durch Suspendieren zumindest einer anorganischen Komponente in zumindest einem dieser Sole hergestellt.

Die Sole werden durch Hydrolisieren zumindest einer Verbindung der Elemente Al, Zr und/oder Si erhalten. Es kann vorteilhaft sein, die zu hydrolysierende Verbindung vor der Hydrolyse in Alkohol oder eine Säure oder eine Kombination dieser Flüssigkeiten zu geben. Als zu hydrolysierende Verbindung wird vorzugsweise zumindest ein Nitrat, ein Chlorid, ein Carbonat, besonders bevorzugt zumindest eine Alkoholatverbindung hydrolisiert. Die Hydrolyse erfolgt vorzugsweise in Gegenwart von Wasser, Wasserdampf, Eis, oder einer Säure oder eine Kombination dieser Verbindungen.

In einer Ausführungsvariante des erfindungsgemäßen Verfahrens werden durch Hydrolyse der zu hydrolisierenden Verbindungen partikuläre Sole hergestellt. Diese partikulären Sole zeichnen sich dadurch aus, dass das die in dem Sol durch Hydrolyse entstandenen Verbindungen partikulär vorliegen. Die parükulären Sole können wie oben oder wie in WO 99/15262 beschrieben hergestellt werden. Diese Sole weisen üblicherweise einen sehr hohen Wassergehalt auf, der bevorzugt größer als 50 Gew.-% ist. Es kann vorteilhaft sein, die zu hydrolysierende Verbindung vor der Hydrolyse in Alkohol oder eine Säure oder eine Kombination dieser Flüssigkeiten zu geben. Die hydrolisierte Verbindung kann zum Peptisieren mit zumindest einer organischen oder anorganischen Säure, vorzugsweise mit einer 10 bis 60%-igen organischen oder anorganischen Säure, besonders bevorzugt mit einer Mineralsäure, ausgewählt aus Schwefelsäure, Salzsäure, Perchlorsäure, Phosphorsäure und Salpetersäure oder einer Mischung dieser Säuren behandelt werden. Die so hergestellten partikulären Sole können anschließend zur Herstellung von Suspensionen eingesetzt werden, wobei die Herstellung von Suspensionen zum Aufbringen auf mit polymerem Sol vorbehandelten Polymerfaservliesen bevorzugt ist.

In einer weiteren Ausführungsvariante des Verfahrens werden durch Hydrolyse der zu hydrolisierenden Verbindungen polymere Sole hergestellt. Bei dieser bevorzugten Ausführungsvariante des erfindungsgemäßen Verfahrens weist das Sol einen Anteil an Wasser und/oder Säure von kleiner 50 Gew.-% auf. Diese polymeren Sole zeichnen sich dadurch aus, dass die in dem Sol durch Hydrolyse entstandenen Verbindungen polymer (also kettenförmig über einen größeren Raum vernetzt) vorliegen. Die polymeren Sole weisen üblicherweise weniger als 50 Gew.%, vorzugsweise sehr viel weniger als 20 Gew.-% an Wasser und/oder wässriger Säure auf. Um auf den bevorzugten Anteil von Wasser und/oder wässriger Säure zu kommen, wird die Hydrolyse vorzugsweise so durchgeführt, dass die zu hydrolisierende Verbindung mit dem 0,5 bis 10fachen Molverhältnis und bevorzugt mit dem halben Molverhältnis Wasser, Wasserdampf oder Eis, bezogen auf die hydrolisierbare Gruppe, der hydrolisierbaren Verbindung, hydrolisiert wird. Eine bis zu 10fache Menge an Wasser kann bei sehr langsam hydrolisierenden Verbindungen wie z. B. beim Tetraethoxysilan eingesetzt werden. Sehr schnell hydrolisierende Verbindungen wie das Zirkontetraethylat können unter diesen Bedingungen durchaus schon partikuläre Sole bilden, weshalb zur Hydrolyse solcher Verbindungen bevorzugt die 0,5fache Menge an Wasser eingesetzt wird. Eine Hydrolyse mit weniger als der bevorzugten Menge an Wasser, Wasserdampf, oder Eis führt ebenfalls zu guten Ergebnissen. Wobei ein Unterschreiten der bevorzugten Menge von einem halben Molverhältnis um mehr als 50 % möglich aber nicht sehr sinnvoll ist, da beim Unterschreiten dieses Wertes die Hydrolyse nicht mehr vollständig ist und Beschichtungen auf Basis solcher Sole nicht sehr stabil sind.

Zur Herstellung von Solen mit einem gewünschten sehr geringen Anteil an Wasser und/oder Säure im Sol kann es vorteilhaft sein, wenn die zu hydrolisierende Verbindung in einem organischen Lösemittel, insbesondere Ethanol, Isopropanol, Butanol, Amylalkohol, Hexan, Cyclohexan, Ethylacetat und oder Mischungen dieser Verbindungen, gelöst wird bevor die eigentliche Hydrolyse vorgenommen wird. Ein so hergestelltes Sol kann zur Herstellung der erfindungsgemäßen Suspension eingesetzt werden.

Sowohl partikuläre Sole als auch polymere Sole können als Sol in dem Verfahren zur Herstellung der Suspension eingesetzt werden. Neben den Solen, die wie gerade beschrieben erhältlich sind, können prinzipiell auch handelsübliche Sole, wie z. B. Zirkonnitratsol oder Silicasol eingesetzt werden. Das Verfahren der Herstellung von Separatoren durch Aufbringen und Verfestigen einer Suspension auf einen Träger an und für sich ist aus DE 101 42 622 und in ähnlicher Form aus WO 99/15262 bekannt, jedoch lassen sich nicht alle Parameter bzw. Einsatzstoffe auf die Herstellung der erfindungsgemäßen Membran übertragen. Der Prozess, der in WO 99/15262 beschrieben wird, ist in dieser Form insbesondere nicht ohne Abstriche auf polymere Vliesmaterialien übertragbar, da die dort beschriebenen sehr wasserhaltigen Solsysteme, häufig keine durchgängige Benetzung der üblicherweise hydrophoben Polymervliese in der Tiefe ermöglichen, da die sehr wasserhaltigen Solsysteme die meisten Polymervliese nicht oder nur schlecht benetzen. Es wurde festgestellt, dass selbst kleinste unbenetzte Stellen im Vliesmaterial dazu fuhren können, dass Membranen bzw. Separatoren erhalten werden, die Fehler (wie Löcher oder Risse) aufweisen und damit unbrauchbar sind.

Es wurde nun überraschenderweise gefunden, dass ein Solsystem bzw. eine Suspension, welches bzw. welche im Benetzungsverhalten den Polymeren angepasst wurde, die Vliesmaterialien vollständig durchtränkt und somit fehlerfreie Beschichtungen erhältlich sind. Bevorzugt erfolgt bei dem Verfahren zur Herstellung des im erfindungsgemäßen Verfahren einzusetzenden Separators deshalb eine Anpassung des Benetzungsverhaltens des Sols bzw. der Suspension. Diese Anpassung erfolgt vorzugsweise durch die Herstellung von polymeren Solen bzw. Suspensionen aus polymeren Solen wobei diese Sole einen oder mehrere Alkohole, wie z. B. Methanol, Ethanol oder Propanol oder Mischungen, die einen oder mehrere Alkohole sowie, vorzugsweise aliphatische Kohlenwasserstoffe aufweisen, umfassen. Es sind aber auch andere Lösemittelgemische denkbar, die dem Sol bzw. der Suspension zugegeben werden können, um diese im Benetzungsverhalten an das verwendete Substrat anzupassen.

Es kann vorteilhaft sein, wenn zur Herstellung der Suspension als anorganische Komponente, zumindest ein Oxid, ausgewählt aus den Oxiden der Elemente Zr, Al und/oder Si, in einem Sol suspendiert wird. Vorzugsweise wird eine anorganische Komponente, die zumindest eine Verbindung, ausgewählt aus Aluminiumoxid, Zirkonoxid und/oder Siliziumdioxid, suspendiert. Vorzugsweise beträgt der Massenanteil der suspendierten Komponente das 1 bis 50fache und ganz besonders bevorzugt das 5 bis 25fache des eingesetzten Sols.

Zur Verbesserung der Haftung der anorganischen Komponenten an Polymerfasern als Substrat kann es vorteilhaft sein, den eingesetzten Suspensionen Haftvermittler, wie z. B. organofunktionelle Silane beizufügen. Als Haftvermittler sind insbesondere Verbindungen, ausgewählt aus den Octylsilanen, den Vinylsilanen, den aminfunktionalisierten Silanen und/oder den Glycidyl-funktionalisierten Silanen, wie z. B. die Dynasilane der Fa. Degussa einsetzbar. Besonders bevorzugte Haftvermittler für Polyethylen (PE) und Polypropylen (PP) sind Vinyl-, Methyl- und Octylsilane, wobei eine ausschließliche Verwendung von Methylsilanen nicht optimal ist, für Polyamide und Polyamine sind es Aminfunktionelle Silane, für Polyacrylate und Polyester sind es Glycidyl-funktionalisierte Silane und für Polyacrylnitril kann man auch Glycidylfunktionalisierte Silane einsetzen. Auch andere Haftvermittler sind einsetzbar, die aber auf die jeweiligen Polymere abgestimmt sein müssen. Die Haftvermittler müssen dabei so ausgewählt werden, dass die Verfestigungstemperatur unterhalb des Schmelz- oder Erweichungspunktes des als Substrat eingesetzten Polymeren und unterhalb dessen Zersetzungstemperatur liegt. Bevorzugt weisen erfindungsgemäße Suspensionen sehr viel weniger als 25 Gew.-%, vorzugsweise weniger als 10 Gew.-% Verbindungen auf, die als Haftvermittler fungieren können. Ein optimaler Anteil an Haftvermittler ergibt sich aus der Beschichtung der Fasern und/oder Partikel mit einer monomolekularen Lage des Haftvermittlers. Die hierzu benötigte Menge an Haftvermittler in Gramm kann durch Multiplizieren der Menge der eingesetzten Oxide, beziehungsweise der Fasern (in g) mit der spezifischen Oberfläche der Materialien (in m²g⁻¹) und anschließendes Dividieren durch den spezifischen Platzbedarf der Haftvermittler (in m² g⁻¹) erhalten werden, wobei der spezifische Platzbedarf häufig in der Größenordnung von 300 bis 400 m² g⁻¹ liegt.

Die nachfolgende Tabelle 1 enthält einen beispielhaften Überblick über einsetzbare Haftvermittler auf Basis von organofunktionellen Si-Verbindungen für typische als Vliesmaterial verwendete Polymere.

**Tabelle 1**

| Polymer | Organofunktionstyp | Haftvermittler |
|---|---|---|
| PAN | Glycidyl | GLYMO |
| | Methacryl | MEMO |
| PA | Amino | AMEO, DAMO |
| PET | Methacryl | MEMO |
| | Vinyl | VTMO, VTEO, VTMOEO |
| PE, PP | Amino | AMEO, AMMO |
| | Vinyl | VTMO, VTEO, Silfin |
| | Methacryl | MEMO |

| | | |
|---|---|---|
| Mit: | | |
| AMEO = 3-Aminopropyltriethoxysilan | | |
| DAMO = 2-Aminoethyl-3-aminopropyltrimethoxysilan | | |
| GLYMO = 3-Glycidyloxytrimethoxysilan | | |
| MEMO = 3-methacryloxypropyltrimethoxysilan | | |
| Silfin = Vinylsilan + Initiator + Katalysator | | |
| VTEO = Vinyltriethoxysilan | | |
| VTMO = Vinyltrimethoxysilan | | |
| VTMOEO = Vinyltris(2-methoxyethoxy)silan | | |

In einer besonderen Ausführungsform des erfindungsgemäßen Verfahrens werden die oben genannten Haftvermittler in einem vorgeschalteten Schritt auf Polymervlies (Substrat) aufgebracht. Hierzu werden die Haftvermittler in einem geeigneten Lösemittel, wie z. B. Ethanol gelöst. Diese Lösung kann auch noch eine geringe Menge an Wasser, vorzugsweise die 0,5 bis 10fache Menge bezogen auf die molare Menge der hydrolysierbaren Gruppe, und kleine Mengen einer Säure, wie z. B. HCl oder HNO₃, als Katalysator für die Hydrolyse und Kondensation der Si-OR-Gruppen enthalten. Durch die bekannten Techniken, wie z. B. Aufsprühen, Aufdrucken, Aufpressen, Einpressen Aufrollen, Aufrakeln, Aufstreichen, Tauchen, Spritzen oder Aufgießen wird diese Lösung auf das Substrat aufgebracht und der Haftvermittler durch eine Temperaturbehandlung bei 50 bis maximal 350 °C auf dem Substrat fixiert. Erst nach dem Aufbringen des Haftvermittlers erfolgt bei dieser Ausführungsvariante des erfindungsgemäßen Verfahrens das Aufbringen und Verfestigen der Suspension.

Durch das Aufbringen eines Haftvermittlers vor dem eigentlichen Aufbringen der Suspension kann das Haftverhalten der Substrate insbesondere gegenüber wässrigen, partikulären Solen verbessert werden, weshalb insbesondere so vorbehandelte Substrate mit Suspensionen auf Basis von handelsüblichen Solen, wie z. B. Zirkonnitratsol oder Silicasol erfindungsgemäß beschichtet werden können. Diese Vorgehensweise des Aufbringens eines Haftvermittlers bedeutet aber auch, dass das Herstellverfahren der erfindungsgemäßen Membran um einen Zwischen- bzw. Vorbehandlungsschritt erweitert werden muss. Dies ist machbar allerdings auch aufwendiger als die Verwendung von angepassten Solen denen Haftvermittler beigegeben wurden, hat aber auch den Vorteil, dass auch beim Einsatz von Suspensionen auf Basis von handelsüblichen Solen bessere Ergebnisse erzielt werden.

Die Beschichtungen werden durch Verfestigen der Suspension in und auf dem Substrat auf das Substrat aufgebracht. Erfindungsgemäß kann die auf und im Substrat vorhandene Suspension durch Erwärmen auf 50 bis 350 °C verfestigt werden. Da bei der Verwendung polymerer Substratmaterialien die maximal Temperatur durch das Substrat vorgegeben wird, ist diese entsprechend anzupassen. So wird je nach Ausführungsvariante des erfindungsgemäßen Verfahrens die auf und im Substrat vorhandene Suspension durch Erwärmen auf 100 bis 350 °C und ganz besonders bevorzugt durch Erwärmen auf 200 bis 280 °C verfestigt. Es kann vorteilhaft sein, wenn das Erwärmen für 1 Sekunde bis 60 Minuten bei einer Temperatur von 100 bis 350 °C erfolgt. Besonders bevorzugt erfolgt das Erwärmen der Suspension zum Verfestigen auf eine Temperatur von 110 bis 300 °C, ganz besonders bevorzugt bei einer Temperatur von 200 bis 280 °C und vorzugsweise für 0,5 bis 10 min.

Das Erwärmen des Verbundes kann mittels erwärmter Luft, Heißluft, Infrarotstrahlung oder durch andere Erwärmungsmethoden nach dem Stand der Technik erfolgen.

Das Verfahren zur Herstellung des einzusetzenden Separators kann z. B. so durchgeführt werden, dass das Substrat von einer Rolle abgerollt wird, mit einer Geschwindigkeit von 1 m/h bis 2 m/s, vorzugsweise mit einer Geschwindigkeit von 0,5 m/min. bis 20 m/min und ganz besonders bevorzugt mit einer Geschwindigkeit von 1 m/min bis 5 m/min durch zumindest eine Apparatur, welche die Suspension auf und in den Support bringt, wie z. B. eine Walze, und zumindest eine weitere Apparatur, welche das Verfestigen der Suspension auf und in dem Support durch Erwärmen ermöglicht, wie z. B. ein elektrisch beheizter Ofen, durchläuft und der so hergestellte Separator auf einer zweiten Rolle aufgerollt wird. Auf diese Weise ist es möglich, den einzusetzenden Separator im Durchlaufverfahren herzustellen. Auch die Vorbehandlungsschritte können im Durchlaufverfahren unter Beibehaltung der genannten Parameter durchgeführt werden.

Für die Umwandlung des noch nicht Lithium-Ionen leitenden Separators in einen Lithium-Ionen leitenden Separator wird als Material zur Herstellung des erfindungsgemäßen Lithium-Ionen leitenden Separators ein negative Festladungen tragendes und Lithium-Kationen als Gegenion aufweisendes Material eingesetzt, wobei das negative Festladungen tragende Material vorzugsweise ausgewählt ist aus Verbindungen, die über eine Phosphon- oder Siloxan-Gruppe an die Oberfläche der anorganischen Beschichtung anbinden.

Besonders bevorzugt weist dieses Lithium-Ionen leitende Material ionische Gruppen aus der Gruppe der Sulfonate, Phosphonate-, Carbonate-, Sulfonylamide oder Gemische dieser Gruppen auf. Diese ionischen Gruppen können chemisch über organische Gruppen oder Spacer an die anorganischen Partikel gebundene organische Verbindungen sein. Besonders bevorzugt sind diese organischen Gruppen oder Spacer fluorierte oder nicht fluorierte Aryl- und/oder Alkylketten und/oder Polyetherketten und die ionischen Gruppen sind über diese mit der inneren und/oder äußeren Oberfläche der im Separator vorhandenen Partikel verbunden. Die ionischen Gruppen sind, entweder direkt oder aber indirekt über die organischen Gruppen oder Spacer, über Si-O- oder Zr-O-Gruppen an die anorganischen Partikel gebunden.

In einer Ausführungsform werden siliziumorganischen Verbindungen der allgemeinen Formel

[(R¹O)₃Si-R²]M⁺,

in der R¹ eine Methyl- oder Ethylgruppe ist, M entweder H oder Li ist und R² eine Bis(Perfluoromethylsulfonyl)amid-Gruppe der Formel

-CF₂-SO₂-N-SO₂-CF₃

darstellt, eingesetzt.

In einer bevorzugten Ausführungsform werden siliziumorganischen Verbindungen der allgemeinen Formel

[{(RO)_{y}(R²)_{z}}ₐSi-{R¹-SO₃⁻}_{b}]M⁺ (I)

oder

[(RO)_{y}(R²)_{z}Si-R¹-PR³O₂⁻]M⁺ (II)

in der R¹ eine lineare oder verzweigte Alkylengruppe mit 1 bis 12 C-Atomen, eine Cycloalkylgruppe mit 5 bis 8 C-Atomen oder eine Einheit der allgemeinen Formeln 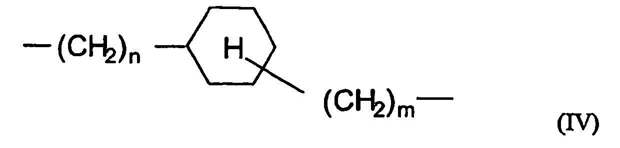
oder 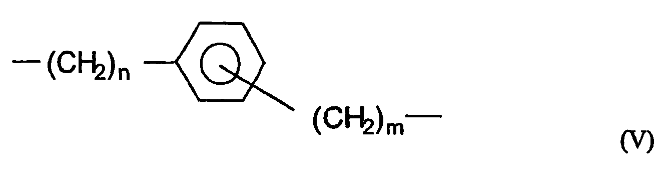
oder

-(CF₂-(CF₂)ₗ-O)ₙ-(CF₂)ₘ- (VI)

angibt, in der 1, n bzw. m eine Zahl von 0 bis 12, in der M ein H⁺ oder ein Lithium-Ion angibt, und in der y eine Zahl zwischen 1 und 3, z eine Zahl zwischen 0 und 2 ist, die Bedingung gilt, dass y + z = 3 ist, in der a eine Zahl zwischen 1 und 3 ist, die Bedingung gilt, dass b = 4 - a ist, in der R und R² gleich oder verschieden sind und Methyl, Ethyl, Propyl, Butyl oder H darstellen und in der R³ gleich H, OH, OM oder R1 ist.

In einer weiteren Ausführungsform können als Lithium-Ionen leitende Materialien auch Lithium-Phosphat-Zirkonat-Gläser, α- und/oder γ- Lithium-Zirkoniumphosphate oder Lithiumsulfonate- oder -phosphonate, die an α- und/oder γ- Zirkoniumphosphonate gebunden sind, oder ein Gemisch dieser Verbindungen im erfindungsgemäßen Separator Verwendung finden. Auch diese Verbindungen lassen sich von den entsprechenden Säuren durch Ersatz des H⁺ durch Li⁺ ableiten. Nachfolgend sind einige Beispiele angegeben:

Li₂Zr(O₃P-R-SO₃)₂

Lᵢ₄Zr(O₃P-R-PO₃)₂

Wobei R für eine perfluorierte, teilweise fluorierte oder nicht fluorierte Aryl- oder Alkylkette mit 1-12 C-Atomen steht.

Alle diese Lithiumsalze, deren Anion an die anorganische Matrix gebunden werden, können also von den entsprechenden Säuren abgeleitet werden. Sie können auch zunächst in Form der Säuren in den Separatoren vorliegen. Vor dem Einsatz in den Batterien muss dann aber die H⁺ in die Li⁺-Form umgewandelt werden.

Diese ionenleitenden Verbindungen liegen bevorzugt in Form einer Lösung oder eines Sols vor. Der Gewichtsanteil der Verbindung in der Lösung oder im Sol kann von 1 bis 99, vorzugsweise von 10 bis 50 Gew.% betragen. Die ionenleitenden Materialien können in der H⁺-Form oder in der Li⁺-Form in der Lösung vorliegen.

Der zunächst nicht Lithium-Ionen leitende Separator wird mit einer solchen Lösung bzw. einem solchen Sol behandelt. Dies kann erfolgen durch z. B. Aufdrucken, Aufpressen, Einpressen Aufrollen, Aufrakeln, Aufstreichen, Aufwalzen, Tauchen, Spritzen oder Aufgießen. Dieser Vorgang kann einmal oder auch mehrmals erfolgen, wobei zwischen den Behandlungsschritten bevorzugt eine Zwischentrocknung bei einer Temperatur von 50 bis 280 °C. Liegen die ionenleitenden Materialien in der H⁺-Form vor, so muss ein weiterer Behandlungsschritt erfolgen, bei dem das H⁺-Ion durch ein Li⁺-Ion ersetzt wird.

Vorzugsweise wird bei dieser Ausführungsvariante ein zu behandelnder Separator eingesetzt, der eine mittlere Porenweite von 0,5 bis 5 µm aufweist.

Je nach verwendeten Materialien kann es erforderlich sein, dass der Separator nach der Behandlung mit zumindest einem Lithium-Ionen leitenden Material oder zumindest einem Material, welches nach einer weiteren Behandlung Lithium-Ionen leitende Eigenschaften aufweist, thermisch behandelt wird. Eine solche thermische Behandlung wird vorzugsweise bei einer Temperatur von 50 bis 280 °C durchgeführt.

Im Falle der Separatoren, die mit ionenleitenden Materialien in der H⁺-Form behandelt wurden, ist es jetzt noch notwendig, die H⁺-Form in die Li⁺-Form zu überführen. Dies erfolgt nach dem bekannten Stand der Technik für solche Prozesse. So kann die H⁺-Form durch Behandlung mit LiOH oder LiNO₃ und anschließendem Entfernen des Wassers bzw. Abrauchen der Salpetersäure in die Li⁺-Form überführt werden. Aber auch alle anderen bekannten Verfahren zum Ionentausch sind denkbar.

In einer weiteren Ausführungsvariante wird ein Lithium-Ionen leitender Separator nicht dadurch erhalten, dass ein nicht Lithium-Ionen leitender Separator durch Behandlung mit einem Lithium-Ionen leitenden Material in einen Lithium-Ionen leitenden Separator überführt wird. Stattdessen wird als Material zur Herstellung der anorganischen porösen Beschichtung ein material eingesetzt, welches Lithium-Ionen leitende Eigenschaften aufweist. Vorzugsweise wird der Suspension bzw. dem Sol zur Beschichtung des Substrates, insbesondere des flexiblen Polymerträgers mit den anorganischen Partikeln eine Komponente beigefügt, die direkt Lithium-Ionen leitend ist oder aber nach einer weiteren Behandlung Lithium-Ionen leitend wird.

Die bei dieser Ausführungsvariante des erfindungsgemäßen Verfahrens eingesetzte Separatoren, weisen Lithium-Ionen leitende Materialien dann bereits im Gefüge des Separators also in der anorganischen Beschichtung des einzusetzenden Separators auf. Das Lithium-Ionen leitende Material wird dabei vorzugsweise als anorganische Komponente bei der Herstellung der Suspensionen, mit welchen die Substrate behandelt werden, eingesetzt. Das Lithium-Ionen leitende Material kann dabei die zur Herstellung der Suspension als anorganische Komponente eingesetzten Metalloxid-Partikeln ganz oder teilweise ersetzen. Vorzugsweise beträgt der Anteil der Lithium-Ionen leitenden Materialien an der anorganischen Komponente, die zur Herstellung der Suspension eingesetzt wird, von 1 bis 99 Gew.%, vorzugsweise von 5 bis 80 Gew.% und ganz besonders bevorzugt von 10 bis 50 Gew.-%.

Als Lithium-Ionen-leitende Materialien können die gleichen Stoffe wie bereits oben genannt eingesetzt werden. Insbesondere wird bei dieser Ausführungsart des erfindungsgemäßen Verfahrens als Material zur Herstellung der anorganischen porösen Beschichtung zumindest ein Material eingesetzt, ausgewählt aus Lithium-Phosphat-Zirkonat-Gläsern, α- und/oder γ-Lithium-Zirkonium-Phosphaten und mit Lithiumsulfonaten oder mit immobilisierten Lithiumsulfonaten dotierten Zirkonphosphaten.

In einer weiteren Ausführungsvariante des erfindungsgemäßen Verfahrens wird der Separator mit Lithium-Ionen leitenden Eigenschaften durch Behandlung eines Separators, der bereits Lithium-Ionen leitende Eigenschaften aufweist, mit zumindest einem Lithium-Ionen leitenden Material oder mit zumindest einem Material, welches nach einer weiteren Behandlung Lithium-Ionen leitende Eigenschaften aufweist, erhalten.

Die bei dieser Ausführungsvariante des erfindungsgemäßen Verfahrens eingesetzten Separatoren, weisen Lithium-Ionen leitende Materialien bereits im Gefüge des Separators also in der anorganischen Beschichtung des einzusetzenden Separators auf. Solche Separatoren sind z. B. wie gerade beschrieben dadurch erhältlich, dass zur Herstellung der anorganischen porösen Beschichtung ein Material eingesetzt wird, welches Lithium-Ionen leitende Eigenschaften aufweist. Dieser bereits Lithium-Ionen leitende Eigenschaften aufweisende Separator wird dann nochmals wie oben bereits für Separatoren mit nicht Lithium-Ionen leitenden Eigenschaften beschrieben behandelt, wobei Lithium-Ionen leitendes Material in die Poren des Separators eingebracht und dort verfestigt wird.

Soll der erfindungsgemäße Separator mit einem zusätzlichen automatischen Abschaltmechanismus ausgerüstet werden, so kann dies z. B. dadurch geschehen, dass nach dem Verfestigen der auf das Substrat aufgebrachten Suspension eine Schicht aus Partikeln, die bei einer gewünschten Temperatur schmelzen und die Poren des Separators verschließen, so genannte Abschaltpartikeln, zur Erzeugung eines Abschaltmechanismus auf den Separator aufgebracht und fixiert wird. Die Schicht aus Abschaltpartikeln kann z. B. durch Aufbringen einer Suspension von Wachspartikeln mit einer mittleren Partikelgröße größer der mittleren Porengröße des Separators in einem Sol, Wasser, Lösemittel oder Lösemittelgemisch erzeugt werden.

Die Suspension zur Aufbringung der Partikel enthält vorzugsweise von 1 bis 50 Gew.-%, bevorzugt von 5 bis 40 Gew.-% und ganz besonders bevorzugt von 10 bis 30 Gew.-% an Abschaltpartikeln, insbesondere Wachspartikeln in der Suspension.

Da die anorganischen Beschichtung des Separators häufig einen sehr hydrophilen Charakter hat, hat es sich als vorteilhaft erwiesen, wenn die Beschichtung des Separators unter Verwendung eines Silans in einem polymeren Sol als Haftvermittler hergestellt wurden und somit hydrophobiert wurden. Um eine gute Haftung und gleichmäßige Verteilung der Abschaltpartikel in der Abschaltschicht auch auf hydrophilen porösen anorganischen Separatorschichten zu erreichen, sind mehrere Varianten möglich.

In einer Ausführungsvariante des erfindungsgemäßen Verfahrens hat es sich als vorteilhaft erwiesen, die poröse anorganische Schicht des Separators vor dem Aufbringen der Abschaltpartikel zu hydrophobieren. Die Herstellung hydrophober Membrane, die nach dem selben Prinzip funktioniert, wird beispielsweise in WO 99/62624 beschrieben. Vorzugsweise wird die poröse anorganische Beschichtung durch Behandlung mit Alkyl-, Aryl- oder Fluoralkylsilanen, wie sie z. B. unter dem Namen Markennamen Dynasilan von der Degussa vertrieben werden, hydrophobiert. Es können dabei z. B. die bekannten Methoden der Hydrophobierung, die unter anderem für Textilien angewendet werden (*D. Knittel; E. Schollmeyer; Melliand Textilber. (1998) 79(S), 362-363),* unter geringfügiger Änderung der Rezepturen, auch für die porösen Beschichtungen des Separators angewendet werden. Zu diesem Zweck wird die Beschichtung bzw. der Separator mit einer Lösung behandelt, die zumindest einen hydrophoben Stoff aufweist. Es kann vorteilhaft sein, wenn die Lösung als Lösemittel Wasser, welches vorzugsweise mit einer Säure, vorzugsweise Essigsäure oder Salzsäure, auf einen pH-Wert von 1 bis 3 eingestellt wurde, und/oder einen Alkohol, vorzugsweise Ethanol, aufweist. Der Anteil an mit Säure behandeltem Wasser bzw. an Alkohol am Lösemittel kann jeweils von 0 bis 100 Vol.-% betragen. Vorzugsweise beträgt der Anteil an Wasser am Lösemittel von 0 bis 60 Vol.-% und der Anteil an Alkohol von 40 bis 100 Vol.-%. In das Lösemittel werden zum Erstellen der Lösung 0,1 bis 30 Gew.-%, vorzugsweise 1 bis 10 Gew.% eines hydrophoben Stoffes gegeben werden. Als hydrophobe Stoffe können z. B. die oben aufgeführten Silane verwendet werden. Überraschenderweise findet eine gute Hydrophobierung nicht nur mit stark hydrophoben Verbindungen, wie zum Beispiel mit dem Triethoxy(3,3,4,4,5,5,6,6,7,7,8,8-tridecafluoroctyl)silan statt, sondern eine Behandlung mit Methyltriethoxysilan oder i-Butyltriethoxysilan ist vollkommen ausreichend, um den gewünschten Effekt zu erzielen. Die Lösungen werden, zur gleichmäßigen Verteilung der hydrophoben Stoffe in der Lösung, bei Raumtemperatur gerührt und anschließend auf die anorganische Beschichtung des Separators aufgebracht und getrocknet. Das Trocknen kann durch eine Behandlung bei Temperaturen von 25 bis 100 °C beschleunigt werden.

In einer weiteren Ausführungsvariante des erfindungsgemäßen Verfahren kann die poröse anorganische Beschichtung vor dem Aufbringen der Abschaltpartikel auch mit anderen Haflvermittlern behandelt werden. Die Behandlung mit einem der unten genannten Haftvermittler kann dann ebenfalls wie oben beschrieben erfolgen, d. h. dass die poröse anorganische Schicht mit einem polymeren Sol, welches ein Silan als Haftvermittler aufweist, behandelt wird.

Die Schicht aus Abschaltpartikeln wird vorzugsweise durch Aufbringen einer Suspension von Abschaltpartikeln in einem Suspensionsmittel, ausgewählt aus einem Sol, Wasser oder Lösemittel, wie z. B. Alkohol, Ether oder Ketone, oder einem Lösemittelgemisch auf die anorganische Beschichtung des Separators und anschließendes Trocknen erzeugt. Die Partikelgröße, der in der Suspension vorliegenden Abschaltpartikel, ist prinzipiell beliebig. Es ist jedoch vorteilhaft, wenn in der Suspension Abschaltpartikel mit einer mittleren Partikelgröße (D_{w}) größer oder gleich, vorzugsweise größer der mittleren Porengröße der Poren der porösen anorganischen Schicht (dₛ) vorliegen, da so sichergestellt wird, dass die Poren der anorganischen Schicht bei der Herstellung des erfindungsgemäßen Separators nicht durch Abschaltpartikel verstopft werden. Bevorzugt weisen die eingesetzten Abschaltpartikel eine mittlere Partikelgröße (D_{w}) auf, die größer als der mittlere Porendurchmesser (dₛ) und kleiner 5 dₛ, besonders bevorzugt kleiner 2 dₛ beträgt.

Sollte es gewünscht sein Abschaltpartikel einzusetzen, die eine Partikelgröße kleiner der Porengröße der Poren der porösen anorganischen Schicht aufweisen, so muss vermieden werden, dass die Partikel in die Poren der porösen anorganischen Separatorschicht eindringen. Gründe für den Einsatz solcher Partikel können z. B. in großen Preisunterschieden aber auch in der Verfügbarkeit solcher Partikel liegen. Eine Möglichkeit das Eindringen der Abschaltpartikel in die Poren der porösen anorganischen Schicht zu verhindern besteht darin, die Viskosität der Suspension so einzustellen, dass in Abwesenheit von äußeren Scherkräften kein Eindringen der Suspension in die Poren der anorganischen Schicht des Separators erfolgt. Eine solch hohe Viskosität der Suspension kann z. B. dadurch erreicht werden, dass der Suspension Hilfsstoffe, die das Fließverhalten beeinflussen, wie z. B. Kieselsäuren (Aerosil, Degussa) hinzugefügt werden. Beim Einsatz von Hilfsstoffen wie z. B. Aerosil 200 ist häufig ein Anteil von 0,1 bis 10 Gew.%, vorzugsweise 0,5 bis 50 Gew.-% Kieselsäure, bezogen auf die Suspension, schon ausreichend um eine genügend hohe Viskosität der Suspension zu erzielen. Der Anteil an Hilfsstoffen kann jeweils durch einfache Vorversuche ermittelt werden.

Es kann vorteilhaft sein, wenn die eingesetzte Abschaltpartikel aufweisende Suspension Haftvermittler aufweist. Eine solche Haftvermittler aufweisende Suspension kann direkt auf eine anorganische Schicht des Separators aufgebracht werden, auch wenn diese nicht vor dem Aufbringen hydrophobiert wurde. Natürlich kann eine Haftvermittler aufweisende Suspension auch auf eine hydrophobierte Schicht oder auf eine Separatorschicht, bei deren Herstellung ein Haftvermittler eingesetzt wurde, aufgebracht werden. Als Haftvermittler in der Abschaltpartikel aufweisenden Suspension werden vorzugsweise Silane eingesetzt, die Amino-, Vinyl- oder Methacrylseitengruppen aufweisen. Solche Haftvermittler sind z. B. AMEO (3-Aminopropyltriethoxysilan), MEMO (3-methacryloxypropyltrimethoxysilan), Silfin (Vinylsilan + Initiator + Katalysator), VTEO (Vinyltriethoxysilan) oder VTMO (Vinyltrimethoxysilan). Solche Silane sind z. B. von der Degussa auch in wässriger Lösung unter der Bezeichnung Dynasilan 2926, 2907 oder 2781 erhältlich. Ein Anteil von maximal 10 Gew.% an Haftvermittler hat sich als ausreichend für die Sicherstellung einer genügend großen Haftung der Abschaltpartikel an der porösen anorganischen Schicht herausgestellt. Vorzugsweise weisen Haftvermittler aufweisende Suspensionen von Abschaltpartikeln von 0,1 bis 10 Gew.-%, bevorzugt von 1 bis 7,5 Gew.% und ganz besonders bevorzugt von 2,5 bis 5 Gew.-% an Haftvermittler bezogen auf die Suspension auf.

Als Abschaltpartikel können alle Partikel eingesetzt werden, die einen definierten-Schmelzpunkt aufweisen. Das Material der Partikel wird dabei entsprechend der gewünschten Abschalttemperatur ausgewählt. Da bei den meisten Batterien relativ niedrige Abschalttemperaturen gewünscht werden, ist es vorteilhaft solche Abschaltpartikel einzusetzen, die ausgewählt sind aus Partikeln aus Polymeren, Polymermischungen, natürlichen und/oder künstlichen Wachsen. Besonders bevorzugt werden als Abschaltpartikel Partikel aus Polypropylen- oder Polyethylenwachs eingesetzt.

Das Aufbringen der die Abschaltpartikel aufweisenden Suspension kann durch Aufdrucken, Aufpressen, Einpressen, Aufrollen, Aufrakeln, Aufstreichen, Tauchen, Spritzen oder Aufgießen auf die poröse anorganische Schicht des Separators erfolgen. Die Abschaltschicht wird vorzugsweise dadurch erhalten, dass die aufgebrachte Suspension bei einer Temperatur von Raumtemperatur bis 100 °C, vorzugsweise von 40 bis 60 °C getrocknet wird.

Es kann vorteilhaft sein, wenn die Abschaltpartikel nach dem Aufbringen auf die poröse anorganische Schicht durch zumindest einmaliges Erwärmen auf eine Temperatur oberhalb der Glastemperatur, so dass ein Anschmelzen der Partikel ohne Änderung der eigentlichen Form erreicht wird, fixiert werden. Auf diese Weise kann erreicht werden, dass die Abschaltpartikel besonders gut an der porösen anorganischen Separatorschicht haften.

Das Aufbringen der die Abschaltpartikel aufweisenden Suspension mit anschließendem Trocknen sowie ein eventuelles Erwärmen über die Glasübergangstemperatur kann kontinuierlich oder quasi kontinuierlich durchgeführt werden. Wird eine flexibler Separator als Ausgangsmaterial eingesetzt, so kann diese wiederum von einer Rolle abgewickelt, durch eine Beschichtungs-, Trocknungs- und gegebenenfalls Erwärmungsapparatur geführt und anschließend wieder aufgerollt werden.

Die erfindungsgemäßen Separatoren bzw. die erfindungsgemäß hergestellten Separatoren können als Separatoren in Lithium-Batterien, insbesondere in Lithium-Hochleistungsbatterien verwendet werden. Erfindungsgemäße hybride Separatoren können als Separatoren in Batterien verwendet werden. Bei der erfindungsgemäßen Verwendung des Separators als Separator in Lithium-Batterien wird der Separator üblicherweise mit einem Elektrolyten getränkt bzw. imprägniert und zwischen der Anode und der Kathode platziert. Als Elektrolyt kann z. B. eine Lösung von LiPF₆, LiBF₄, LiClO₄, LiAsF₆, LiCF₃SO₃, LiClO₄, Lithiumbisoxalatoborat (Libob) und/oder Lithium-Bis(trifluorormethylsulfonyl)amid (BTA, LiN(SO₂CF₃)₂ in Ethylencarbonat (EC), Dimethylcarbonat (DC), Propylencarbonat (PC), Methylpropylcarbonat (PMC), Butylencarbonat (BC), Diethylcarbonat (DEC), γ-Butyrolacton (γ-BL), SOCl₂ und/oder SO₂ eingesetzt werden. Die Elektrolytlösungen weisen üblicherweise von 0,1 bis 5 mol/l und besonders bevorzugt von 0,5 bis 2 mol/l an Leitsalz auf

Durch Einsatz von erfindungsgemäßen Separatoren in Batterien sind erfindungsgemäße Batterien, insbesondere Lithium-Batterien erhältlich, die den erfindungsgemäßen Separator aufweisen. Solche Lithium-Batterien können primäre oder sekundäre Batterien, vorzugsweise sekundäre Batterien sein. Besonders bevorzugt sind solche erfindungsgemäßen Batterien Lithium-Hochleistungsbatterien.

Die erfindungsgemäßen Lithium-Ionen leitenden Separatoren, das Verfahren zu deren Herstellung und deren Verwendung wird an Hand der nachfolgenden Beispiele beschrieben, ohne darauf beschränkt zu sein.

### Vergleichsbeispiel 1:

### Herstellung eines S450PET-Separators (nicht Lithium-Ionen leitender Separator als Vergleichsmuster)

Zu 160 g Ethanol werden zunächst 15 g einer 5 Gew.%igen, wässrigen HCl-Lösung, 10 g Tetraethoxysilan, 2,5 g Methyltriethoxysilan und 7,5 g Dynasilan GLYMO (Hersteller aller Dynasilane: Degussa AG) gegeben. In diesem Sol, das zunächst für einige Stunden gerührt wurde, werden dann jeweils 125 g der Aluminiumoxide Martoxid MZS-1 und Martoxid MZS-3 (Hersteller beider Aluminiumoxide: Martinswerke) suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt.

Ein PET-Vlies mit einer Dicke von ca. 30 µm und einem Flächengewicht von etwa 20 g/m² wird in einem kontinuierlichen Aufwalzverfahren (Bandgeschwindigkeit ca. 8 m/h, T = 200 °C) mit obigem Schlicker beschichtet. Bei diesem Aufwalzverfahren wird der Schlicker mit einer Walze, die sich gegenläufig zur Bandrichtung (Bewegungsrichtung des Vlieses) bewegt, auf das Vlies aufgewalzt. Das Vlies läuft anschließend durch einen Ofen, der die angegebene Temperatur aufweist. Man erhält am Ende einen Separator mit einer mittleren Porenweite von 450 nm, einer Dicke von ca. 50 µm und einem Gewicht von ca. 50 g/m².

Der Flächenwiderstand (gemessen mittels Impedanzspektroskopie und nicht-blockierenden Li-Elektroden) des Separators getränkt mit einer einmolaren Lösung von LiPF₆ in EC/DMC liegt bei ca. 5 Ωcm².

### Vergleichsbeispiel 2:

### Li-Ionen-Batterie mit hybridem keramischen Separator nach dem Stand der Technik

Ein gemäß Vergleichsbeispiel 1 hergestellter S450PET-Separator wird in eine Li-Ionen-Zelle, bestehend aus einer Positiv-Masse aus LiCoO₂, einer Negativ-Masse bestehend aus Graphit und einem Elektrolyten aus LiPF₆ in Ethylencarbonat/Dimethylcarbonat, eingebaut [LiCoO₂ // S-450-PET, EC/DMC 1:1, 1M LiPF₆ // Graphit]. Die Batterie läuft stabil über mehrere hundert Zyklen. Aufgrund des recht großen Innenwiderstandes im Separator kann nur knapp 90 % der Kapazität der Zelle mit konstant Strom geladen werden.

### Beispiel 1: Herstellung eines Lithium-Ionen leitenden S450PET/Li-Separators durch Behandlung eines nicht Lithium-Ionen leitenden Separators

Zunächst wird eine Lösung eines Lithium-leitenden Stoffes hergestellt. Hierzu werden 10 g Trihydroxysilylpropylsulfonsäure (Firma Degussa) in 50 g Wasser vorgelegt. Zu dieser Lösung gibt man die zur Sulfonsäure äquimolare Menge an LiOH (in Form einer wässrigen 20 Gew.-%igen Lösung), so dass die Salz-Lösung einen pH-Wert von etwa 7 hat.

Mit dieser Lösung wird der aus Vergleichsbeispiel 1 bekannte nicht Lithium-Ionen leitende Separator beschichtet. Dies erfolgt nach dem ebenfalls aus Vergleichsbeispiel 1 bekannten Verfahren, d. h. in einem kontinuierlichen Aufwalzverfahren (Bandgeschwindigkeit ca. 8 m/h, T = 150 °C). Der Separator läuft anschließend durch einen Ofen, der die angegebene Temperatur aufweist. Man erhält am Ende einen Separator mit einer nur wenig verringerten mittleren Porenweite von etwa 400 nm und einer Dicke von unverändert ca. 50 µm im Vergleich zum Vergleichsmuster.

Der Flächenwiderstand (gemessen mittels Impedanzspektroskopie und nicht-blockierenden Li-Elektroden) des Separators getränkt mit einer einmolaren Lösung von LiPF₆ in EC/DMC liegt bei ca. 4 Ωcm², also um ca. 20 % niedriger als beim Vergleichsmuster.

### Beispiel 2: Herstellung eines Lithium-Ionen leitenden Separators

Zu 130 g Wasser und 30 g Ethanol werden zunächst 15 g einer 5 Gew.%igen, wässrigen HNO₃-Lösung, 10 g Tetraethoxysilan, 2,5 g Methyltriethoxysilan und 7,5 g Dynasilan Silfin (Hersteller aller Silane bzw. Dynasilane: Degussa AG) gegeben. In diesem Sol, das zunächst für einige Stunden gerührt wurde, werden dann jeweils 125 g der Aluminiumoxide Martoxid MZS-1 und Martoxid MZS-3 (Hersteller beider Aluminiumoxide: Martinswerke) suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt.

Parallel wird eine Lösung eines Lithium-leitenden Stoffes hergestellt. Hierzu werden 10 g Trihydroxysilylpropylphosphonsäure in 50 g Wasser vorgelegt. Zu dieser Lösung gibt man die zur Phosphonsäure äquimolare Menge an LiOH (in Form einer wässrigen 20 Gew.%igen Lösung), so dass die Salz-Lösung einen pH-Wert von etwa 7 hat.

Der keramische Schlicker und die Lithiumsalzlösung werden gemischt. Direkt nach dem Mischen wird ein PET-Vlies mit einer Dicke von ca. 15 µm und einem Flächengewicht von etwa 6 g/m² in einem kontinuierlichen Aufwalzverfahren (Bandgeschwindigkeit ca. 8 m/h, T = 180 °C) mit diesem Schlicker beschichtet. Bei diesem Aufwalzverfahren wird der Schlicker mit einer Walze, die sich gegenläufig zur Bandrichtung (Bewegungsrichtung des Vlieses) bewegt, auf das Vlies aufgewalzt. Das Vlies läuft anschließend durch einen Ofen, der die angegebene Temperatur aufweist. Man erhält am Ende einen Lithium-Ionen leitenden Separator mit einer mittleren Porenweite von 450 nm, einer Dicke von knapp 30 µm und einem Gewicht von ca. 25 g/m².

Der Flächenwiderstand (gemessen mittels Impedanzspektroskopie und nicht-blockierenden Li-Elektroden) des Separators getränkt mit einer einmolaren Lösung von LiPF₆ in EC/DMC liegt bei ca. 1 Ωcm².

### Beispiel 3: Herstellung eines Lithium-Ionen leitenden Separators

Zu 140 g Wasser und 15 g Ethanol werden zunächst 30 g einer 5 Gew.-%igen, wässrigen HNO₃-Lösung, 10 g Tetraethoxysilan, 2,5 g Methyltriethoxysilan und 7,5 g Dynasilan GLYMO (Hersteller aller Dynasilane: Degussa AG) gegeben. In diesem Sol, das zunächst für einige Stunden gerührt wurde, werden dann jeweils 80 g der Aluminiumoxide Martoxid MZS-1 und Martoxid MZS-3 (Hersteller beider Aluminiumoxide: Martinswerke) sowie 100 g α-Zirkoniumphosphat (Firma Southem Ionics, Pulver wurde noch weiter aufgemahlen und hat jetzt eine mittlere Partikelgröße von ca. 2 µm) suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt.

Ein PET-Vlies mit einer Dicke von ca. 15 µm und einem Flächengewicht von etwa 6 g/m² wird in einem kontinuierlichen Aufwalzverfahren (Bandgeschwindigkeit ca. 8 m/h, T = 210 °C) mit diesem Schlicker beschichtet. Bei diesem Aufwalzverfahren wird der Schlicker mit einer Walze, die sich gegenläufig zur Bandrichtung (Bewegungsrichtung des Vlieses) bewegt, auf das Vlies aufgewalzt. Das Vlies läuft anschließend durch einen Ofen, der die angegebene Temperatur aufweist. Man erhält am Ende einen Protonen leitenden Separator mit einer mittleren Porenweite von 450 nm, einer Dicke von knapp 30 µm und einem Gewicht von ca. 25 g/m².

Im nächsten Schritt muss der Separator von der H⁺-Form noch in die Li⁺-Form überführt werden. Hierzu taucht man den Separator für wenige Minuten in ein Bad aus 0,5M-LiOH-Lösung und trocknet den Separator wieder bei 150 °C. Der Separator ist jetzt Lithium-Ionen leitend.

Der Flächenwiderstand (gemessen mittels Impedanzspektroskopie und nicht-blockierenden Li-Elektroden) des Separators getränkt mit einer einmolaren Lösung von LiPF₆ in EC/DMC liegt bei ca. 1,5 Ωcm².

### Beispiel 4: Herstellung eines Lithium-Ionen leitenden S450PET/Li-Separators durch Behandlung eines nicht Lithium-Ionen leitenden Separators

Zu 140 g Wasser und 15 g Ethanol werden zunächst 30 g einer 5 Gew.-%igen, wässrigen HNO₃-Lösung, 10 g Tetraethoxysilan, 2,5 g Methyltriethoxysilan und 7,5 g Dynasilan GLYMO (Hersteller aller Dynasilane: Degussa AG) gegeben. In diesem Sol, das zunächst für einige Stunden gerührt wurde, werden dann jeweils 125 g der Aluminiumoxide Martoxid MZS-1 und Martoxid MZS-3 (Hersteller beider Aluminiumoxide: Martinswerke) suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt.

Ein PET-Vlies mit einer Dicke von ca. 15 µm und einem Flächengewicht von etwa 6 g/m² wird damit in einem kontinuierlichen Aufwalzverfahren (Bandgeschwindigkeit ca. 8 m/h, T = 210 °C) mit obigem Schlicker beschichtet. Bei diesem Aufwalzverfahren wird der Schlicker mit einer Walze, die sich gegenläufig zur Bandrichtung (Bewegungsrichtung des Vlieses) bewegt, auf das Vlies aufgewalzt. Das Vlies läuft anschließend durch einen Ofen, der die angegebene Temperatur aufweist. Man erhält am Ende einen nicht Lithium-Ionen leitenden Separator mit einer mittleren Porenweite von 450 nm, einer Dicke von knapp 30 µm und einem Gewicht von ca. 25 g/m².

Parallel wird eine Lösung von 10g Trihydroxysilylpropylsulfonsäure (Firma Degussa) in 50 g Wasser hergestellt. Der noch nicht Lithium-Ionen leitende 30 µm dicke Separator wird ebenfalls in einem kontinuierlichen Aufwalzverfahren (Bandgeschwindigkeit ca. 8 m/h, T = 150 °C) mit dieser Lösung der Sulfonsäure beschichtet. Der Separator läuft anschließend durch einen Ofen, der die angegebene Temperatur aufweist.

Im nächsten Schritt muss der Separator von der H⁺-Form noch in die Li⁺-Form überführt werden. Hierzu taucht man den Separator für wenige Minuten in ein Bad aus 0,5M-LiOH-Lösung und trocknet den Separator wieder bei 150 °C. Der Separator ist jetzt Lithium-Ionen leitend.

Der Flächenwiderstand (gemessen mittels Impedanzspektroskopie und nicht-blockierenden Li-Elektroden) des nicht Lithium-Ionen leitenden Separators getränkt mit einer einmolaren Lösung von LiPF₆ in EC/DMC liegt bei ca. 2,5 Ωcm². Der des Lithium-Ionen leitenden Separators liegt unter gleichen Bedingungen bei ca. 1,5 Ωcm².

### Beispiel 5: Herstellung eines Lithium-Ionen leitenden S450PET-Separators durch Behandlung eines nicht Lithium-Ionen leitenden Separators

Zu 140 g Wasser und 15 g Ethanol werden zunächst 30 g einer 5 Gew.-%igen, wässrigen HNO₃-Lösung, 10 g Tetraethoxysilan, 2,5 g Methyltriethoxysilan und 7,5 g Dynasilan GLYMO (Hersteller aller Dynasilane: Degussa AG) gegeben. In diesem Sol, das zunächst für einige Stunden gerührt wurde, werden dann jeweils 125 g der Aluminiumoxide Martoxid MZS-1 und Martoxid MZS-3 (Hersteller beider Aluminiumoxide: Martinswerke) suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt.

Ein PET-Vlies mit einer Dicke von ca. 15 µm und einem Flächengewicht von etwa 6 g/m² wird in einem kontinuierlichen Aufwalzverfahren (Bandgeschwindigkeit ca. 8 m/h, T = 210 °C) mit diesem Schlicker beschichtet. Bei diesem Aufwalzverfahren wird der Schlicker mit einer Walze, die sich gegenläufig zur Bandrichtung (Bewegungsrichtung des Vlieses) bewegt, auf das Vlies aufgewalzt. Das Vlies läuft anschließend durch einen Ofen, der die angegebene Temperatur aufweist. Man erhält am Ende einen nicht Lithium-Ionen leitenden Separator mit einer mittleren Porenweite von 450 nm, einer Dicke von knapp 30 µm und einem Gewicht von ca. 25 g/m².

Parallel wird eine Lösung eines Lithium-leitenden Stoffes hergestellt. Hierzu werden 10 g Trihydroxysilylperfluorooctylsulfonsäure in 50 g Wasser vorgelegt. Zu dieser Lösung gibt man die zur Sulfonsäure äquimolare Menge an LiOH (in Form einer wässrigen 20 Gew.-%igen Lösung), so dass die Salz-Lösung einen pH-Wert von etwa 7 hat.

Mit dieser Lösung wird der obige nicht Lithium-Ionen leitende Separator wiederum in einem kontinuierlichen Aufwalzverfahren (Bandgeschwindigkeit ca. 8 m/h, T = 150 °C) beschichtet. Der Separator läuft anschließend zur Trocknung durch einen Ofen, der die angegebene Temperatur aufweist.

Der Flächenwiderstand (gemessen mittels Impedanzspektroskopie und nicht-blockierenden Li-Elektroden) des Separators getränkt mit einer einmolaren Lösung von LiPF₆ in EC/DMC liegt bei ca. 1,5 Ωcm².

### Beispiel 6: Li-Ionen-Batterie mit 50 µm-dickem Lithium-Ionen leitenden Separator

Ein gemäß Beispiel 1 hergestellter S450PET/Li-Separator wird in eine Li-Ionen-Zelle, bestehend aus einer Positiv-Masse aus LiCoO₂, einer Negativ-Masse bestehend aus Graphit und einem Elektrolyten aus LiPF₆ in Ethylencarbonat/Dimethylcarbonat, eingebaut [LiCoO2 // S-450-PET, EC/DMC 1:1, 1M LiPF₆ // Graphit]. Die Batterie läuft stabil über mehrere hundert Zyklen. Aufgrund des im Vergleich zu Vergleichsbeispiel 2 deutlich verringerten Innenwiderstandes im Separator kann jetzt deutlich mehr als 90 % der Kapazität der Zelle mit konstant Strom geladen werden.

### Beispiel 7: Li-Ionen-Batterie mit 30 µm-dickem Lithium-Ionen leitenden Separator

Ein gemäß Beispiel 5 hergestellter S450PET/Li-Separator wird in eine Li-Ionen-Zelle, bestehend aus einer Positiv-Masse aus LiCoO₂, einer Negativ-Masse bestehend aus Graphit und einem Elektrolyten aus LiPF₆ in Ethylencarbonat/Dimethylcarbonat, eingebaut [LiCoO2 // S-450-PET, EC/DMC 1:1, 1M LiPF₆ // Graphit]. Die Batterie läuft stabil über mehrere hundert Zyklen. Aufgrund des im Vergleich zu Vergleichsbeispiel 2 und Beispiel 6 deutlich verringerten Innenwiderstandes im Separator kann jetzt praktisch die gesamte Kapazität der Zelle mit konstant Strom geladen werden.

## Patentansprüche

1. Separator für Lithium-Hochleistungsbatterien auf Basis eines flächigen, mit einer Vielzahl von Öffnungen versehenen, flexiblen Substrates mit einer auf und in diesem Substrat befindlichen porösen, anorganischen, elektrisch isolierenden Beschichtung, die die Öffnungen des Substrates verschließt, wobei das Material des Substrates ausgewählt ist aus ungewebten, nicht elektrisch leitfähigen Polymerfasern und die anorganische, elektrisch isolierende Beschichtung Partikel aufweist,
**dadurch gekennzeichnet,**
**dass** der Separator ohne das Vorhandensein eines Elektrolyten Lithium-Ionen leitende Eigenschaften aufweist und ein elektrischer Isolator ist und dass der Separator zumindest ein anorganisches Material aufweist, das auch organische Gruppen aufweisen kann, und das Lithium-Ionen leitende Eigenschaften aufweist, und das mit der anorganischen Beschichtung chemisch verbunden ist

2. Separator nach Anspruch 1,
**dadurch gekennzeichnet,**
**dass** die Partikel der anorganischen elektrisch isolierenden Beschichtung Partikel der Oxide der Elemente Al, Zr und/oder Si aufweisen.

3. Separator nach einem der Ansprüche 1 oder 2,
**dadurch gekennzeichnet,**
**dass** zumindest ein anorganisches Material, das auch organische Gruppen aufweisen kann und das Lithium-Ionen leitende Eigenschaften aufweist, als Beimischung im Gefüge des Separators vorhanden ist.

4. Separator nach zumindest einem der Ansprüche 1 bis 3,
**dadurch gekennzeichnet,**
**dass** zumindest ein Teil des die anorganische poröse Beschichtung bildenden Materials Lithium-Ionen leitende Eigenschaften aufweist.

5. Separator nach zumindest einem der Ansprüche 1 bis 4,
**dadurch gekennzeichnet,**
**dass** als anorganische Lithium-Ionen leitende Materialien zumindest eine Verbindung aus der Gruppe der Lithium-Phosphat-Zirkonat-Gläser, α- und/oder γ- Lithium-Zirkoniumphosphate oder Lithiumsulfonate- oder -phosphonate, die an α- und/oder γ-Zirkoniumphosphonate gebunden sind, oder ein Gemisch dieser Verbindungen im erfindungsgemäßen Separator vorhanden ist.

6. Separator nach zumindest einem der Ansprüche 1 bis 5,
**dadurch gekennzeichnet,**
**dass** die inneren und/oder äußeren Oberflächen der im Separator vorhandenen Oxidpartikel mit einer Schicht aus einem Lithium-Ionen leitenden anorganischen Material, das auch organische Gruppen aufweisen kann, überzogen sind.

7. Separator nach Anspruch 6,
**dadurch gekennzeichnet,**
**dass** die Schicht eine Dicke von 10 bis 100 nm aufweist.

8. Separator nach zumindest einem der Ansprüche 1 bis 7,
**dadurch gekennzeichnet,**
**dass** der Separator ein Lithium-Ionen leitendes Material aufweist, welches negative Ladungen tragende Matrixbestandteile und Lithium-Kationen aufweist.

9. Separator nach zumindest einem der Ansprüche 1 bis 8,
**dadurch gekennzeichnet,**
**dass** das Lithium-Ionen leitende Material ionische Gruppen aus der Gruppe der Sulfonate-, Phosphonate-, Carbonate-, Sulfonylamide oder Gemische dieser Gruppen aufweist.

10. Separator nach Anspruch 9,
**dadurch gekennzeichnet,**
**dass** die ionischen Gruppen chemisch über organische Gruppen oder Spacer an die anorganischen Partikel gebunden sind.

11. Separator nach Anspruch 10,
**dadurch gekennzeichnet,**
**dass** die ionischen Gruppen, direkt oder indirekt über die organischen Gruppen oder Spacer, über Si-O- oder Zr-O-Gruppen an die anorganischen Partikel gebunden sind.

12. Separator nach Anspruch 11,
**dadurch gekennzeichnet,**
**dass** diese organischen Gruppen oder Spacer fluorierte oder nicht fluorierte Aryl- und/oder Alkylketten und/oder Polyetfierketten sind und die ionischen Gruppen **dadurch** mit der inneren und/oder äußeren Oberfläche der im Separator vorhandenen Partikel verbunden sind.

13. Separator nach zumindest einem der Ansprüche 1 bis 12,
**dadurch gekennzeichnet,**
**dass** der ionenleitende Separator bis herab zu einem kleinsten Radius von 0,5 mm biegbar ist

14. Verfahren zur Herstellung eines Separators mit Lithium-Ionen leitenden Eigenschaften gemäß einem der Ansprüche 1 bis 13, umfassend ein flächiges, mit einer Vielzahl von Öffnungen versehenes, flexibles Substrat mit einer auf und in diesem Substrat befindlichen porösen, anorganischen, elektrisch isolierenden Beschichtung, wobei das Material des Substrates ausgewählt ist aus ungewebten, nicht elektrisch leitfähigen Polymerfasern,
**dadurch gekennzeichnet,**
**dass** ein flächiges, mit einer Vielzahl von Öffnungen versehenes, flexibles Substrat in und auf diesem Substrat mit einer Beschichtung versehen wird, wobei das Material des Substrates ausgewählt ist aus ungewebten, nicht elektrisch leitfähigen Fasern von Polymeren und die Beschichtung eine poröse, elektrisch isolierende keramische Beschichtung ist und dass zur Herstellung des Separators eine Verbindung eingesetzt wird, die Lithium-Ionen leitende Eigenschaften aufweist.

15. Verfahren nach Anspruch 14,
**dadurch gekennzeichnet,**
**dass** der Separator mit Lithium-Ionen leitenden Eigenschaften durch Behandlung eines Separators, der keine Lithium-Ionen leitenden Eigenschaften aufweist, mit zumindest einem ionenleitenden Material oder mit zumindest einem Material, welches nach einer weiteren Behandlung ionenleitende Eigenschaften aufweist, erhalten wird.

16. Verfahren nach Anspruch 14 oder 15,
**dadurch gekennzeichnet,**
**dass** zur Behandlung mit einem Lithium-Ionen leitenden Material als Material zur Herstellung des Lithium-Ionen leitenden Separators ein negative Festladungen tragendes und Lithium-Kationen als Gegenion aufweisendes Material eingesetzt wird, wobei das negative Festladungen tragende Material ausgewählt ist aus Verbindungen, die über eine Phosphon- oder Siloxan- Gruppe an die Oberfläche der anorganischen Beschichtung anbinden.

17. Verfahren nach zumindest einem der Ansprüche 14 bis 16,
**dadurch gekennzeichnet,**
**dass** die Behandlung des Separators mit zumindest einem Lithium-Ionen leitenden Material oder zumindest einem Material, welches nach einer weiteren Behandlung Lithium-Ionen leitende Eigenschaften aufweist, durch Tränken, Tauchen, Bestreichen, Aufwalzen, Aufrakeln, Besprühen oder andere Beschichtungstechniken erfolgt.

18. Verfahren nach zumindest einem der Ansprüche 14 bis 17,
**dadurch gekennzeichnet,**
**dass** der Separator nach der Behandlung mit zumindest einem Lithium-Ionen leitenden Material oder zumindest einem Material, welches nach einer weiteren Behandlung Lithium-Ionen leitende Eigenschaften aufweist, thermisch behandelt wird.

19. Verfahren nach Anspruch 18,
**dadurch gekennzeichnet,**
**dass** die thermische Behandlung bei einer Temperatur von 50 bis 280 °C durchgeführt wird.

20. Verfahren nach zumindest einem der Ansprüche 14 bis 20,
**dadurch gekennzeichnet,**
**dass** als Material zur Herstellung der anorganischen porösen Beschichtung ein Material eingesetzt wird, welches Lithium-Ionen leitende Eigenschaften aufweist.

21. Verfahren nach Anspruch 20,
**dadurch gekennzeichnet,**
**dass** als Material zur Herstellung der anorganischen porösen Beschichtung ein Material, ausgewählt aus Lithium-Phosphat-Zirkonat-Gläsem, α- und/oder γ-Lithium-Zirkonium Phosphate und mit Lithiumsulfonaten oder mit immobilisierten Lithiumsulfonaten dotierten Zirkonphosphaten eingesetzt wird,

22. Verwendung eines Separators gemäß zumindest einem der Ansprüche 1 bis 13 als Separator in Lithium-Batterien.

23. Verwendung gemäß Anspruch 22,
**dadurch gekennzeichnet**,
das der Separator für den Einsatz als Separator in Lithium-Batterien mit einem Elektrolyten imprägniert wird.

24. Verwendung gemäß Anspruch 23,
**dadurch gekennzeichnet**,
das als Elektrolyt eine Lösung von LiPF₆, LiBF₄, LiClO₄, LiAsF₆, LiCF₃SO₃, LiClO₄, Lithiumbisoxolatoborat (Libob) und/oder Lithium-Bis(trifluororrnethylsulfonyl)amid (BTA, LiN(SO₂CF₃)₂) in Ethylencarbonat (EC), Dimethylcarbonat (DC), Propylencarbonat (PC), Methylpropylcarbonat (PMC), Butylencarbonat (BC), Diethylcarbonat (DEC), γ-Butyrolacton (γ-BL), SOCl₂ und/oder SO₂ eingesetzt wird.

25. Batterie,
**dadurch gekennzeichnet,**
**dass** sie einen Separator gemäß zumindest einem der Ansprüche 1 bis 13 aufweist.

## Claims

1. A separator for a high power lithium battery, based on a sheetlike flexible substrate having a multiplicity of openings and having a porous inorganic electrically insulating coating on and in said substrate, said coating closing the openings in the substrate, the material of said substrate being selected from non-woven electrically non-conductive polymeric fibres and said inorganic electrically insulating coating comprising particles, **characterized in that** the separator is an electrical insulator and has lithium ion conducting properties without the presence of an electrolyte and **in that** the separator comprises at least one inorganic material which may also contain an organic group and which has lithium ion conducting properties and which is chemically bonded to the inorganic coating.

2. A separator according to claim 1, **characterized in that** the particles of the inorganic electrically insulating coating comprise particles of an oxide of the element Al, Zr and/or Si.

3. A separator according to either of claims 1 and 2, **characterized in that** at least one inorganic material which may also contain an organic group and which has lithium ion conducting properties is present as an admixture in the structure of the separator.

4. A separator according to at least one of claims 1 to 3, **characterized in that** at least part of the material forming the inorganic porous coating has lithium ion conducting properties.

5. A separator according to at least one of claims 1 to 4, **characterized in that** the inorganic lithium ion conducting material comprises at least one compound from the group of the lithium phosphate zirconate glasses, α- and/or γ-lithium zirconium phosphates or lithium sulphonates or lithium phosphonates which are attached to α- and/or γ-zirconium phosphonates, or a mixture of these compounds.

6. A separator according to at least one of claims 1 to 5, **characterized in that** the inner and/or outer surface of the oxide particles present in the separator is coated with a layer of a lithium ion conducting inorganic material which may also contain an organic group.

7. A separator according to claim 6, **characterized in that** the layer has a thickness of from 10 to 100 nm.

8. A separator according to at least one of claims 1 to 7, **characterized in that** the separator comprises a lithium ion conducting material comprising negative-charge-carrying matrix constituents and lithium cations.

9. A separator according to at least one of claims 1. to 8, **characterized in that** the lithium ion conducting material contains an ionic group selected from the group consisting of sulphonates, phosphonates, carbonates, sulphonylamides and a mixture of these groups.

10. A separator according to claim 9, **characterized in that** the ionic group is bonded chemically to the inorganic particles via an organic group or a spacer.

11. A separator according to claim 10, **characterized in that** the ionic group is attached directly or indirectly via the organic group or spacer, via an Si-O- or Zr-O- group to the inorganic particles.

12. A separator according to claim 11, **characterized in that** said organic group or spacer is a fluorinated or non-fluorinated aryl and/or alkyl chain and/or polyether chain and the ionic group is thereby connected to the inner and/or outer surface of the particles present in the separator.

13. A separator according to at least one of claims 1 to 12, **characterized in that** the ion conducting separator is bendable down to a smallest radius of 0.5 mm.

14. A process for producing a separator having lithium ion conducting properties according to any one of claims 1 to 13, comprising a sheetlike flexible substrate having a multiplicity of openings and having a porous inorganic electrically insulating coating on and in said substrate, the material of said substrate being selected from non-woven electrically non-conductive polymeric fibres, **characterized in that** a sheetlike flexible substrate having a multiplicity of openings is provided with a coating on and in said substrate, the material of said substrate being selected from non-woven electrically non-conductive polymeric fibres and said coating being a porous electroinsulating ceramic coating and a compound having lithium ion conducting properties is used to produce the separator.

15. A process according to claim 14, **characterized in that** the separator having lithium ion conducting properties is obtained by treating a separator which does not have lithium ion conducting properties with at least one ion conducting material or with at least one material which following a further treatment has ion conducting properties.

16. A process according to claim 14 or 15, **characterized in that** for the treatment with a lithium ion conducting material the material used to produce the lithium ion conducting separator is a material which carries a negative fixed charge and a lithium cation as counterion, the material carrying a negative fixed charge being selected from compounds which attach to the surface of the inorganic coating via a phosphonyl or siloxane group.

17. A process according to at least one of claims 14 to 16, **characterized in that** the treatment of the separator with at least one lithium ion conducting material or at least one material which following a further treatment has lithium ion conducting properties takes place by impregnating, dipping, spreadcoating, rollercoating, knife coating, spraying or another coating technique.

18. A process according to at least one of claims 14 to 17, **characterized in that** the separator following treatment with at least one lithium ion conducting material or with at least one material which following a further treatment has lithium ion conducting properties is thermally treated.

19. A process according to claim 18, **characterized in that** the thermal treatment is conducted at a temperature of from 50 to 280°C.

20. A process according to at least one of claims 14 to 20, **characterized in that** the material used to produce the inorganic porous coating is a material which has lithium ion conducting properties.

21. A process according to claim 20, **characterized in that** the material used to produce the inorganic porous coating is a material selected from lithium phosphate zirconate glasses, α- and/or γ-lithium zirconium phosphates, and zirconium phosphates doped with lithium sulphonates or doped with immobilized lithium sulphonates.

22. The use of a separator according to at least one of claims 1 to 13 as a separator in a lithium battery.

23. The use according to claim 22, **characterized in that** the separator for use in a lithium battery is impregnated with an electrolyte.

24. The use according to claim 23, **characterized in that** a solution of LiPF₆, LiBF₄, LiClO₄, LiAsF₆, LiCF₃SO₃, LiClO₄, lithium bisoxalatoborate (Libob) and/or lithium bis(trifluorormethylsulphonyl)amide (BTA, LiN (SO₂CF₃)₂) in ethylene carbonate (EC), dimethyl carbonate (DC), propylene carbonate (PC), methyl propyl carbonate (PMC), butylene carbonate (BC), diethyl carbonate (DEC), γ-butyrolactone (γ-BL), SOCl₂ and/or SO₂ is used as electrolyte.

25. A battery, **characterized in that** it comprises a separator according to at least one of claims 1 to 13.

## Revendications

1. Séparateur pour des batteries haute performance au lithium, à base d'un substrat plat, souple, doté de nombreux orifices, avec un revêtement inorganique, poreux, électriquement isolant sur et dans le substrat dont il ferme les orifices, le matériau du substrat étant choisi à partir de fibres de polymères non tissées, non conductrices d'électricité et le revêtement inorganique électriquement isolant présentant des particules,
**caractérisé en ce que**
le séparateur présente des propriétés de conduction d'ions lithium en l'absence d'un électrolyte, il est un isolateur électrique et contient au moins un matériau inorganique pouvant également présenter des groupes organiques, présentant des propriétés de conduction d'ions lithium et relié chimiquement au revêtement inorganique.

2. Séparateur selon la revendication 1,
**caractérisé en ce que**
les particules du revêtement inorganique électriquement isolant présentent des particules des oxydes des éléments Al, Zr et/ou Si.

3. Séparateur selon l'une quelconque des revendications 1 ou 2,
**caractérisé en ce qu'**
au moins un matériau inorganique qui peut également présenter des groupes organiques et qui présente des propriétés de conduction d'ions lithium est présent en tant qu'additif dans la structure du séparateur.

4. Séparateur selon au moins l'une quelconque des revendications 1 à 3,
**caractérisé en ce qu'**
au moins une partie du matériau formant le revêtement poreux inorganique présente des propriétés de conduction d'ions lithium.

5. Séparateur selon au moins l'une quelconque des revendications 1 à 4,
**caractérisé en ce que**
comme matériaux inorganiques conducteurs d'ions lithium il contient au moins un composé du groupe des verres de lithium-phosphate-zirconate, des phosphates, de lithium-zirconium α et/ou γ ou des phosphonates ou des sulfonates de lithium liés à des phosphonates de zirconium α et/ou γ, ou un mélange de ces composés.

6. Séparateur selon au moins l'une quelconque des revendications 1 à 5.
**caractérisé en ce que**
les surfaces intérieures et/pu extérieures des particules d'oxyde présentes dans le séparateur sont recouvertes d'une couche de matériau inorganique conducteur d'ions lithium et pouvant également présenter des groupes organiques.

7. Séparateur la revendication 6,
**caractérisé en ce que**
la couche présente une épaisseur de 10 à 100 nm.

8. Séparateur selon au moins l'une quelconque des revendications 1 à 7,
**caractérisé en ce que**
le séparateur présente un matériau conducteur d'ions lithium qui comporte des cations lithium et des composants de matrice portant des charges négatives.

9. Séparateur selon au moins l'une quelconque des revendications 1 à 8,
**caractérisé en ce que**
le matériau conducteur d'ions lithium présente des groupes ioniques issus du groupe des amides de sulfonates, de phosphonates, de carbonates et de sulfonyle ou des mélanges de ces groupes.

10. Séparateur selon la revendication 9,
**caractérisé en ce que**
les groupes ioniques sont liés chimiquement aux particules inorganiques par des espaceurs ou des groupes organiques.

11. Séparateur selon la revendication 10,
**caractérisé en ce que**
les groupes ioniques sont liés aux particules inorganiques via des groupes Si-O ou Zr-O, directement ou indirectement via les espaceurs ou les groupes organiques.

12. Séparateur selon la revendication 11.
**caractérisé en ce que**
ces espaceurs ou ces groupes organiques sont des chaînes aryle et/ou alkyle et/ou des chaînes polyéther fluorées ou non fluorées, et les groupes ioniques sont ainsi reliés à la surface intérteure et/ou extérieure des particules présentes dans le séparateur.

13. Séparateur selon au moins l'une quelconque des revendications 1 à 12,
**caractérisé en ce que**
le séparateur conducteur d'ions peut être plié jusqu'à un rayon minimum de 0,5 mm.

14. Procédé de fabrication d'un séparateur avec les propriétés de conduction d'ions lithium selon au moins l'une quelconque des revendications 1 à 13, comprenant un substrat plat, souple, doté de nombreux orifices, avec sur et dans le substrat un revêtement inorganique, poreux, électriquement isolant, le matériau du substrat étant choisi à partir de fibres en polymères non tissées, non conductrices d'électricité,
**caractérisé en ce qu'**
un substrat plat, souple et doté de nombreux orifices est doté d'un revêtement dans et sur ce substrat, le matériau du substrat étant choisi à partir de fibres de polymères non tissées, non conductrices d'électricité et le revêtement étant un revêtement poreux, céramique, électriquement isolant, et pour la fabrication du séparateur on emploie un composé présentant des propriétés de conduction d'ions lithium.

15. Procédé selon la revendication 14,
**caractérisé en ce que**
le séparateur avec des propriétés de conduction d'ions lithium est obtenu en traitant un séparateur ne présentant aucune propriété de conduction d'ions lithium, avec au moins un matériau conducteur d'ions ou au moins un matériau présentant des propriétés de conduction d'ions après un nouveau traitement.

16. Procédé selon la revendication 14 ou 15,
**caractérisé en ce que**
pour le traitement avec un matériau conducteur d'ions lithium, comme matériau destiné à la fabrication du séparateur conducteur d'ions lithium, on utilise un matériau présentant des charges fixes négatives et des cations lithium servant de contre-ions le matériau portant des charges fixes négatives étant choisi à partir de composés reliés à la surface du revêtement inorganique via un groupe phosphone ou siloxane.

17. Procédé selon au moins l'une quelconque des revendications 14 à 16,
**caractérisé en ce que**
le traitement du séparateur s'effectue par imprégnation, immersion, enduisage, laminage, raclage, vaporisation et d'autres techniques de revêtement, avec au moins un matériau conducteur d'ions lithium ou au moins un matériau présentant des propriétés de conduction d'ions lithium après un nouveau traitement.

18. Procédé selon au moins l'une quelconque des revendications 14 à 17,
**caractérisé en ce que**
le séparateur reçoit un traitement thermique après avoir été traité avec au moins un matériau conducteur d'ions lithium ou au moins un matériau présentant des propriétés de conduction d'ions lithium après un autre traitement.

19. Procédé selon la revendication 18.
**caractérisé en ce que**
le traitement thermique est réalisé à une température de 50 à 280°C.

20. Procédé selon l'une quelconque des revendications 14 à 20,
**caractérisé en ce qu'**
en tant que matériau destiné à la fabrication du revêtement poreux inorganique, on utilise un matériau présentant des propriétés de conduction d'ions lithium.

21. °) Procédé selon la revendication 20,
**caractérisé en ce qu'**
en tant que matériau destiné à la fabrication du revêtement poreux inorganique, on utilise un matériau sélectionné à partir de verres de lithium-phosphate-zirconate, de phosphates de lithium-zirconium α et/ou γ et de phosphates de zirconium dopés en sulfonates de lithium ou sulfonates de lithium immobilisés.

22. Utilisation d'un séparateur selon au moins l'une quelconque des revendications 1 à 13 en tant que séparateur dans des batteries au lithium.

23. Utilisation selon la revendication 22,
**caractérisée en ce que**
pour l'utilisation comme séparateur dans des batteries au lithium, le séparateur est imprégné avec un électrolyte.

24. Utilisation selon la revendication 23,
**caractérisée en ce qu'**
en tant qu'électrolye on utilise une solution de LiPF₆, LIBF₄, LiClO₄, LiAsF₆, LiCF3SC₃, LiClO₄, de borate de bisoxalate de lithium (Libob) et/ou de bis(trifluorométhylsulfonylamide) de lithium (BTA, LiN(SO₂CF₃)₂), dans le carbonate d'éthylène (EC), le carbonate de diméthyle (DC), le carbonate de propylène (PC), le carbonate de méthylpropyle (PMC), le carbonate de butylène (BC), le carbonate de diéthyle (DEC), le γ-butyrolacton (γ-BL), le SOCl₂ et/ou le SO₂.

25. Batterie ou pile,
**caractérisée en ce qu'**
elle présente un séparateur selon au moins l'une quelconque des revendications 1 à 13.
